(19) Europäisches Patentamt
European Patent Office
Office européen des brevets

(11) Publication number: 0 430 244 A1

(12) **EUROPEAN PATENT APPLICATION**

(21) Application number: 90122859.3

(51) Int. Cl.[5]: G03C 1/83, G03C 1/12

(22) Date of filing: 29.11.90

(30) Priority: 30.11.89 JP 311558/89

(43) Date of publication of application: 05.06.91 Bulletin 91/23

(84) Designated Contracting States: DE FR GB NL Bulletin

(71) Applicant: FUJI PHOTO FILM CO., LTD.
210 Nakanuma Minami Ashigara-shi
Kanagawa 250-01(JP)

(72) Inventor: Harada, Toru, c/o Fuji Photo Film Co., Ltd.
No. 210 Nakanuma
Minami Ashigara-shi, Kanagawa-ken(JP)
Inventor: Inagaki, Yoshio, c/o Fuji Photo Film Co., Ltd.
No. 210 Nakanuma
Minami Ashigara-shi, Kanagawa-ken(JP)

(74) Representative: Patentanwälte Grünecker, Kinkeldey, Stockmair & Partner
Maximilianstrasse 58
W-8000 München 22(DE)

(54) **Silver halide photographic materials.**

(57) A silver halide photographic material is described containing at least one dye of formula (A):

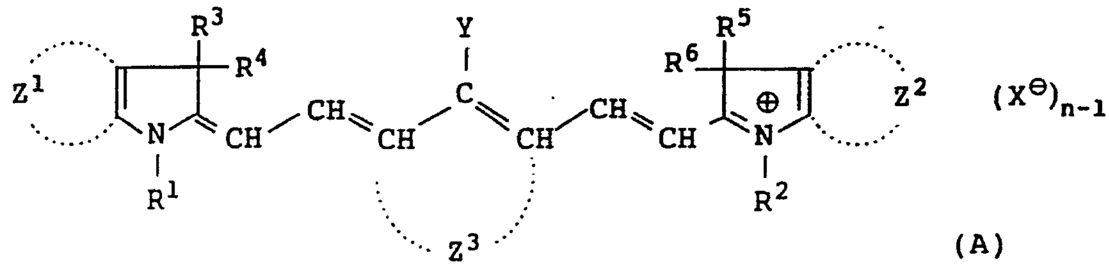

(A)

where $R^1$, $R^2$, $R^3$, $R^4$, $R^5$ and $R^6$ are same or different and each represents a substituted or unsubstituted alkyl group;
$Z^1$ and $Z^2$ each represents a non-metallic atomic group necessary for forming a substituted or unsubstituted benzo-condensed ring or naphtho-condensed ring;
$Z^3$ represents a non-metallic atomic group necessary for forming a 5-membered or 6-membered ring;
Y represents a hydrogen atom or a monovalent group;
X represents an anion; and
n represents 1 or 2, and when the dye molecule forms an intramolecular salt, n is 1.

The dye of formula (A) has an absorption in an infrared range and is photochemically inactive and stable in the material. After the material is processed, the dye is easily decolored. The dye is effective as anti-irradiation and anti-halation and is useful as a filter dye.

EP 0 430 244 A1

# SILVER HALIDE PHOTOGRAPHIC MATERIALS

## FIELD OF THE INVENTION

The present invention relates to a silver halide photographic material having a colored hydrophilic colloid layer and, more precisely, it relates to a silver halide photographic material having a hydrophilic colloid layer containing a dye which has an absorption in the infrared range and which is photochemically inactive and is easily decolored in the step of photographic processing.

## BACKGROUND OF THE INVENTION

In preparing silver halide photographic materials, coloration of photographic emulsion layers and other layers is often effected for the purpose of absorbing lights falling within a particular wavelength range.

If it is necessary to control the spectral composition of the light to penetrate into photographic emulsion layers, a colored layer is provided on the support remotely from the support than photographic emulsion layers. The colored layer is called a filter layer. In the case of a multi-layered color photographic material having plural photographic emulsion layers, the filter layer may be positioned in the intermediate between them.

For the purpose of preventing blur of images to be caused by re-penetration of the light as scattered during or after passing through photographic emulsion layers and reflected on the interface between the emulsion layer and the support or on the surface of the photographic material opposite to the emulsion layer, into the photographic emulsion layers, or for the purpose of preventing halation, a colored layer may also be provided between the photographic emulsion layer and the support or on the surface of the support opposite to the photographic emulsion layer. The colored layer is called an anti-halation layer. In the case of a multi-layered color photographic material, the anti-halation layer may be provided in the intermediate between the respective layers.

For the purpose of preventing lowering of the image sharpness to be caused by scattering of light in photographic emulsion layers (the phenomenon is generally called as "irradiation"), coloration of photographic emulsion layers is often effected.

The layers to be colored for the purpose are mostly hydrophilic colloid layers and, in general, water-soluble dyes are incorporated into the layers so as to color them. The dyes need to satisfy the following conditions.

(1) They have a pertinent spectral absorption in accordance with the use and the object.

(2) They are photochemically inactive That is to say, they do not have any harmful influences on the chemical properties of silver halide photographic emulsion layers. For example, they do not lower the sensitivity of the emulsion layers, they do not cause latent image fading and they do not cause fogging.

(3) They are decolored or dissolved in the step of photographic processing so that they do not leave any harmful coloration on the processed photographic materials.

As dyes which satisfy the above-mentioned conditions, various dyes which may absorb visible rays or ultraviolet rays have heretofore been known, and they are suitable for the purpose of improving formation of images in the conventional photographic elements as sensitized in the wavelength range of 700 nm or less. In particular, triarylmethane and oxonole dyes are widely used in this respect.

On the other hand, recently, development of anti-halation dyes and anti-irradiation dyes which may absorb lights of falling within an infrared range is desired in order that they are used in photographic recording materials as sensitized in an infrared wavelength range, for example, those to be used for recording outputs of near-infrared lasers.

For instance, as one example of a method of exposing the photographic materials of the type, a so-called scanner type image-forming process is known where an original is scanned, and the silver halide photographic material is exposed on the basis of the image signal from the scanned original so as to form a negative image or positive image corresponding to the original on the photographic material.

In the method, a semiconductor layer is most preferably used as the recording light source of the scanner system. A semiconductor layer is small-sized and inexpensive and may easily be modulated, and additionally it has a longer life than any other He-Ne laser or argon laser and may emit in an infrared range. Therefore, when it is applied to infrared-sensitive photographic materials, a light safelight may be used and the operatability in processing the photographic materials is improved. Thus, such a semiconductor layer has various advantages.

However, since pertinent dyes which have an absorption in an infrared range and which satisfy the

above-mentioned conditions (1), (2) and (3) are not known, excellent photographic materials which have a high infrared-sensitivity and which have sufficient anti-halation and anti-irradiation properties are little. Accordingly, under the current situation, the excellent characteristics of the semiconductor laser as mentioned above could not be utilized satisfactorily.

For instance, JP-A-62-123454 and JP-A-63-55544 (the term "JP-A" as used herein means an "unexamined published Japanese patent application") mention tricarbocyanine dyes. However, the present inventors have found that when the dyes are applied to silver halide photographic materials they often lower the storage stability of the materials and lower the sensitivity thereof or fog the materials. Additionally, they have further found that the proposed tricarbocyanine dyes are not sufficient with respect to decoloration in the processed photographic materials.

## SUMMARY OF THE INVENTION

The first object of the present invention is to provide a silver halide photographic material having a hydrophilic colloid layer as colored with a water-soluble dye which does not have any bad influence on the photographic characteristics of the photographic emulsion and which may be decolored by photographic processing.

The second object of the present invention is to provide a silver halide photographic material which may form good images and which has an excellent storage stability without lowering the infrared-sensitivity of the material.

The third object of the present invention is to provide a silver halide photographic material which may well be decolored after development and which has a high sensitivity to infrared rays.

The objects of the present invention have been attained by a silver halide photographic material comprising a support having provided thereon a hydrophilic colloid layer which contains at least one dye of formula (A):

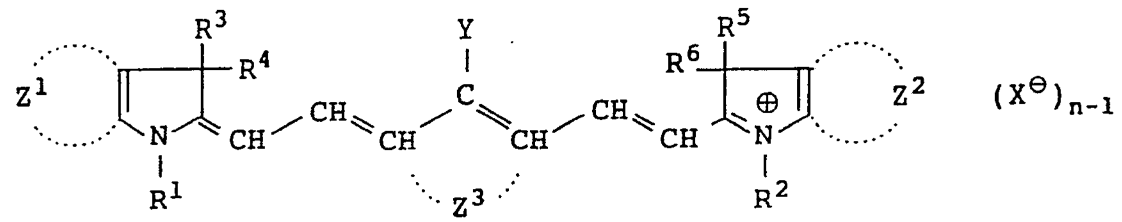

(A)

where $R^1$, $R^2$, $R^3$, $R^4$, $R^5$ and $R^6$ are same or different and each represents a substituted or unsubstituted alkyl group;

$Z^1$ and $Z^2$ each represents a non-metallic atomic group necessary for forming a substituted or unsubstituted benzo-condensed ring or naphtho-condensed ring;

$Z^3$ represents a non-metallic atomic group necessary for forming a 5-membered or 6-membered ring;

Y represents a hydrogen atom or a monovalent group;

X represents an anion; and

n represents 1 or 2, and when the dye molecule forms an intramolecular salt, n is 1.

As one preferred embodiment, the silver halide photographic material of the present invention has a hydrophilic colloid layer containing at least one dye of the above-mentioned formula (A) and at least one silver halide emulsion layer as spectral-sensitized with at least one of cationic tricarbocyanine dyes and/or cationic dicarbocyanine dyes.

## DETAILED DESCRIPTION OF THE INVENTION

Dyes of formula (A) will be explained in detail hereunder.

The alkyl group to be represented by $R^1$, $R^2$, $R^3$, $R^4$, $R^5$ or $R^6$ is preferably a lower alkyl group having from 1 to 5 carbon atoms (for example, methyl, ethyl, n-propyl,n-butyl, isopropyl or n-pentyl group). It may have substituent(s) (for example, sulfonic acid group, carboxylic acid group, hydroxyl group). More preferably, $R^1$ and $R^2$ each represents a 1-5C lower alkyl group having a sulfonic acid group (for example, 2-sulfoethyl, 3-sulfopropyl or 4-sulfobutyl group).

An acidic substituent as referred to herein means a sulfonic acid group or a carboxylic acid group. A

sulfonic acid group includes a sulfo group and salts thereof; and a carboxylic acid group includes carboxyl group and salts thereof. As examples of salts, there are mentioned salts of alkali metals such as Na or K, ammonium salts, and organic ammonium salts with triethylamine, tributyl amine or pyridine.

As substituents which may be on the benzo-condensed ring or naphtho-condensed ring to be formed by the non-metallic atomic group represented by $Z^1$ or $Z^2$, there are mentioned a sulfonic acid group, a carboxylic acid group, a hydroxyl group, a halogen atom (e.g., F, Cl, Br), a cyano group, a substituted amino group (e.g., dimethylamino, diethylamino, ethyl-4-sulfobutylamino, di(3-sulfopropyl)amino), and substituted or unsubstituted 1-5C alkyl groups as bonded to the ring directly or via a divalent linking group (e.g., methyl, ethyl, propyl, butyl). As substituents to be on the alkyl group, a sulfonic acid group, a carboxylic acid group, and a hydroxyl group are preferred. As the divalent linking group, for example, -O-, -NHCO-, $-NHSO_2-$, -NHCOO-, -NHCONH-, -COO-, -CO- and $-SO_2-$are preferred.

Especially preferably, the benzo-condensed ring has one or more sulfonic acid groups; and the naphtho-condensed ring has two or more sulfonic acid groups.

Especially preferably, $Z^1$ and $Z^2$ in formula (A) each represents a non-metallic atomic group necessary for forming a naphto-condensed ring having two or more sulfonic acid groups and the dye represented by formula (A) has at least six acidic substituents per one molecule. Also, $Z^1$ and $Z^2$ in formula (A) each represents a non-metallic atomic group necessary for forming a benzo-condensed ring having one or more sulfonic acid groups and the dye represented by formula (A) has at least four acidic substituents per one molecule.

As examples of the 5-membered or 6-membered ring to be represented by $Z^3$, there are mentioned cyclopentene ring, cyclohexene ring and 4,4-dimethylcyclohexene ring.

As examples of the monovalent group to be represented by Y, there are preferably mentioned a lower alkyl group (e.g., methyl), a substituted or unsubstituted phenyl group, an aralkyl group (e.g., benzyl), a lower alkoxy group (e.g., methoxy), a di-substituted amino group (e.g., dimethylamino, diphenylamino, methylphenylamino, morpholino, imidazolidino, ethoxycarbonylpiperazino), an alkylcarbonyloxy group (e.g., acetoxy), an alkylthio group (e.g., methylthio), a cyano group, a nitro group, and a halogen atom (e.g., F, Cl, Br).

As examples of the anion to be represented by X, there are mentioned a halide ion (e.g., Cl, Br), a p-toluenesulfonate ion and an ethylsulfate ion.

n represents 1 or 2, and when the dye forms an intramolecular salt, n is 1.

Specific examples of the dye compounds of the above-mentioned formula (A) which are employed in the present invention are mentioned below, which, however, do not restrict the scope of the present invention.

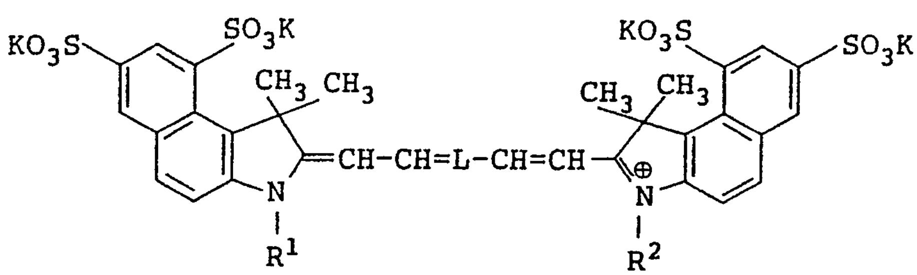

| Compound | L | $R^1$ | $R^2$ |
|---|---|---|---|
| 1 | 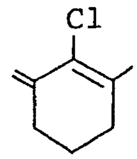 | $C_4H_8SO_3K$ | $C_4H_8SO_3^{\ominus}$ |
| 2 | 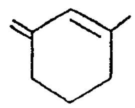 | " | " |
| 3 | 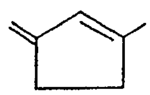 | " | " |
| 4 | 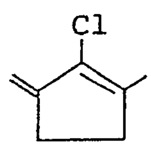 | " | " |
| 5 | 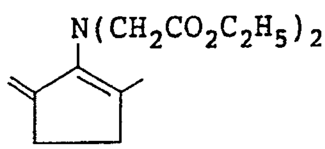 | " | " |
| 6 | 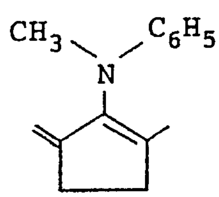 | " | " |

| Compound | L | $R^1$ | $R^2$ |
|---|---|---|---|
| 7 | 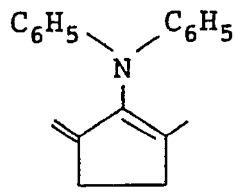 | $C_4H_8SO_3K$ | $C_4H_8SO_3^{\ominus}$ |
| 8 | 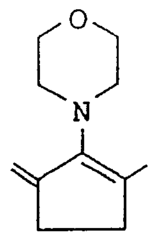 | $C_3H_6SO_3K$ | $C_3H_6SO_3^{\ominus}$ |
| 9 | 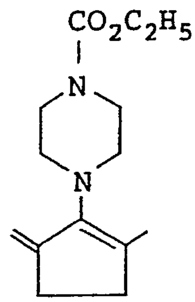 | $C_2H_4CO_2K$ | $C_2H_4CO_2^{\ominus}$ |
| 10 | 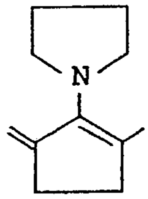 | $C_2H_4SO_3K$ | $C_2H_4SO_3^{\ominus}$ |

1 1

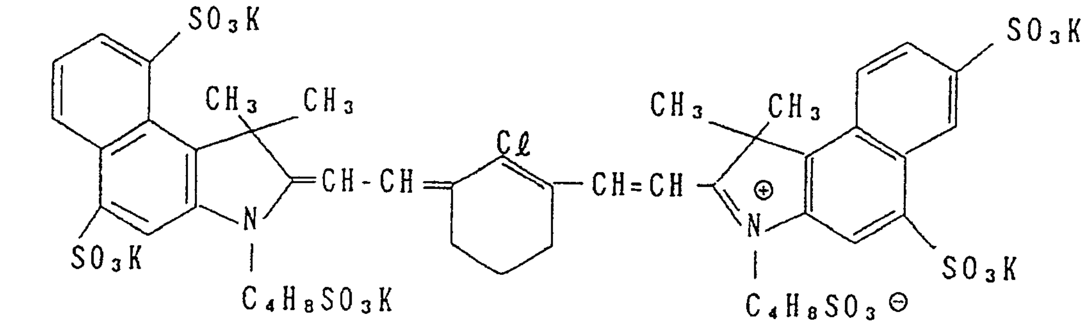

1 2

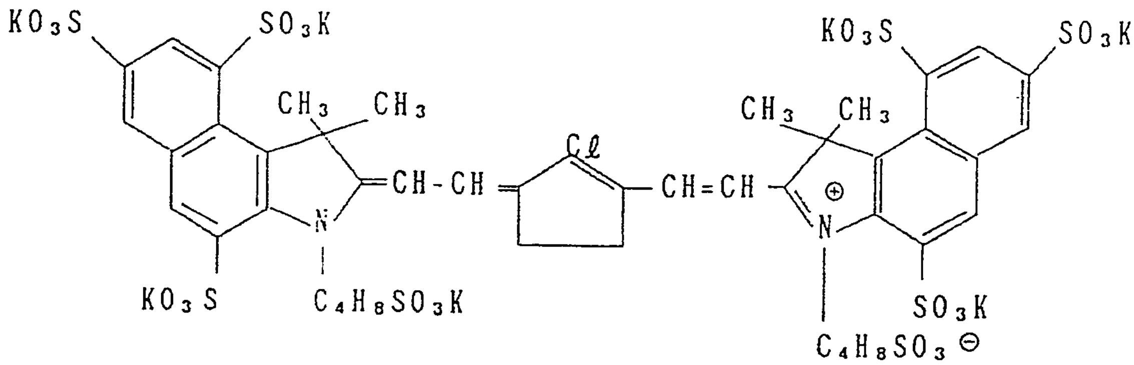

1 3

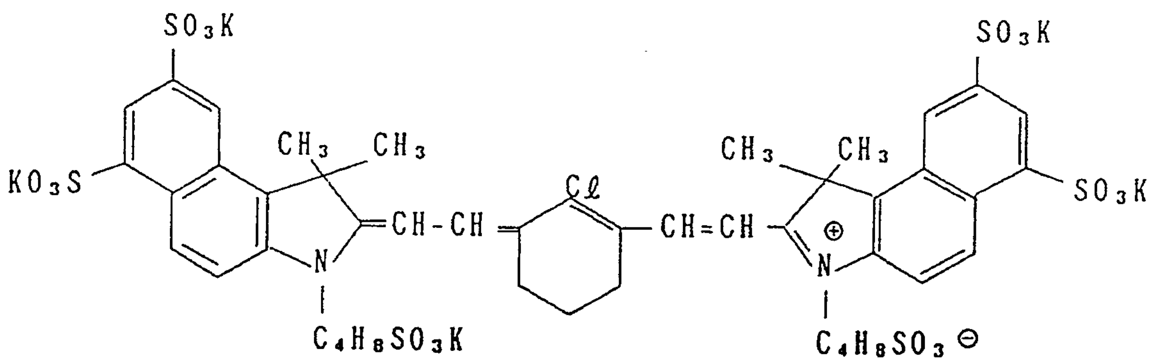

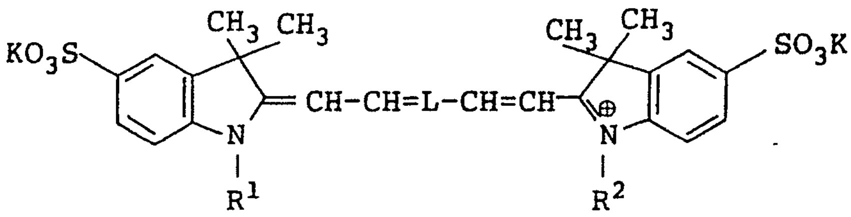

| Compound | L | $R^1$ | $R^2$ |
|---|---|---|---|
| 14 | 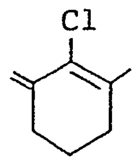 | $C_4H_8SO_3K$ | $C_4H_8SO_3^{\ominus}$ |
| 15 | 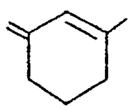 | " | " |
| 16 | 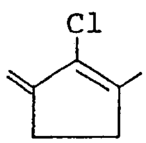 | " | " |
| 17 | 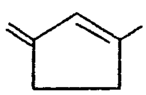 | " | " |

| Compound | L | $R^1$ | $R^2$ |
|---|---|---|---|
| 18 | 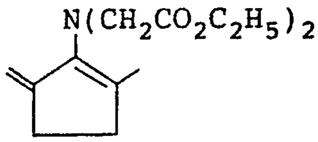 | $C_4H_8SO_3K$ | $C_4H_8SO_3^{\ominus}$ |
| 19 | 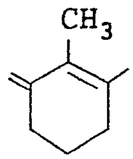 | " | " |
| 20 | 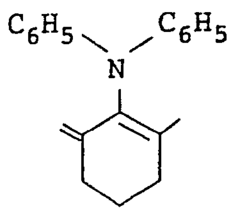 | " | " |
| 21 | 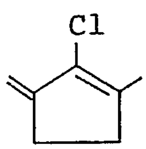 | $C_2H_4SO_3K$ | $C_2H_4SO_3^{\ominus}$ |

2 2

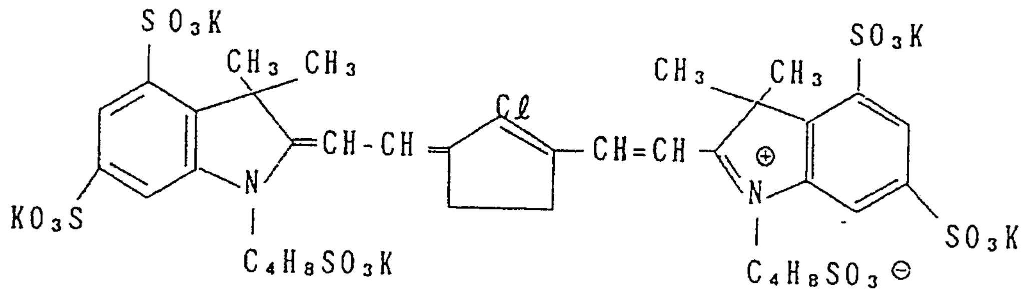

2 3

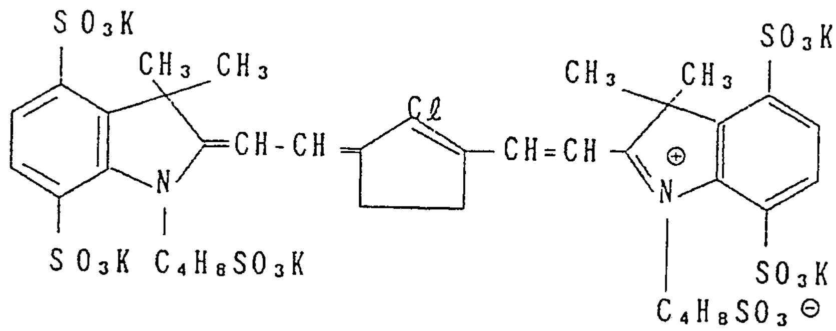

2 4

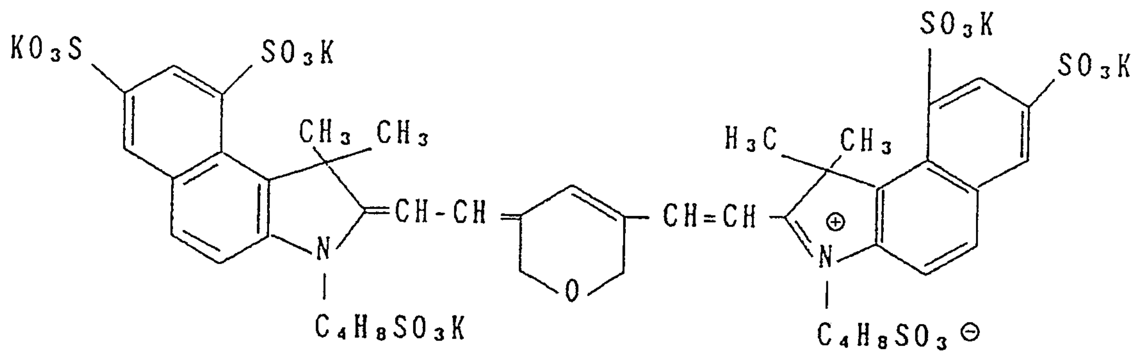

Preferred examples of the dye compounds of the above-mentioned formula (A) which are employed in the present invention include Compounds 1, 2, 3, 14, 16 and 17.

The dyes of formula (A) have an absorption maximum to fall within the range of from 730 to 850 nm, and these are prepared in accordance with the methods illustrated in J. Chem. Soc., 189, 1933 and JP-A-62-123454 and JP-A-63-55544 and with reference to the following synthesis examples.

Synthesis Example 1: Synthesis of Dye Compound No. 1

13.6 ml of triethylamine and 4.4 g of 3-chloro-2,4-trimethyleneglutacondialdehyde-dianil were added to a mixture of 12 g of 1-(4-sulfobutyl)-2,3,3-trimethyl-1H-benz[e]indole and 120 ml of methanol, and 7.2 ml of acetic anhydride was dropwise added thereto. The whole was stirred for 8 hours at room temperature, and 5 g of potassium acetate was added thereto, whereupon the crystal as precipitated out was taken out by

filtration. The crystal was then dissolved in 100 ml of water and filtered, and 50 ml of methyl alcohol containing 5 g of potassium acetate was added to the filtrate and stirred for 30 minutes. Then, the crystal as precipitated out was taken out by filtration.

Yield: 9.7 g. m.p. 250 °C or higher.

$$\lambda_{max}^{H_2O} \; 810 \text{ nm } (\varepsilon = 2.35\times10^5)$$

Synthesis Example 2: Synthesis of Dye Compound No. 14

1.5 ml of triethylamine, 0.9 g of 3-chloro-2,4-trimethyleneglutacondialdehyde-dianil and 0.6 ml of acetic anhydride were added to a mixture of 2.6 g of 1-(4-sulfobutyl)-2,3,3-trimethyl-5-sulfoindolenine and 26 ml of methanol and stirred for 7 hours at room temperature. Afterwards, 2 g of potassium acetate was added to the reaction mixture and the crystal as precipitated out was taken out by filtration. The crystal was then recrystallized from 50 ml of water and 25 ml of methanol.

Yield: 1.6g. m.p. 250 °C or higher.

$$\lambda_{max}^{H_2O} \; 780 \text{ nm } (\varepsilon = 2.56\times10^5)$$

The dyes of the above-mentioned formula (A) are dissolved in a pertinent solvent (for example, water, alcohol such as methanol or ethanol, or methyl cellosolve, or a mixed solvent thereof) or are converted into hydrolysates thereof and are added preferably to coating compositions for light-sensitive or light-insensitive hydrophilic colloid layers. The dyes may be used in the form of a combination of two or more kinds of them.

The amount of the dyes to be added is generally from $10^{-3}$ g/m$^2$ to 2.5 g/m$^2$, especially preferably from $10^{-3}$ g/m$^2$ to 1.0 g/m$^2$.

The photographic dyes of the above-mentioned formula (A) are especially effective for the purpose of anti-irradiation. Where they are used for this purpose, they are added essentially to emulsion layers.

The photographic dyes of the formula (A) are also especially effective as anti-halation dyes. In the case, they are added to a backing layer or to an interlayer between the support and an emulsion layer.

Additionally, the photographic dyes of the formula (A) may also be used as filter dyes advantageously.

The halogen composition of the silver halide emulsions to be employed in the present invention is not specifically defined but may be any desired one. However, in view of the rapid processability, a substantially silver iodide-free silver chlorobromide or silver chloride emulsion in which the silver chloride content is 90 mol% or more as a mean value of the halogen composition of total silver halide grains therein is preferred. In particular, it is preferred that at least one light-sensitive layer contains such a high silver chloride emulsion. Especially preferably, all the light-sensitive layers of constituting the photographic material of the present invention are composed of such high silver chloride emulsions.

The "substantially silver iodide-free emulsion" as referred to herein means that the silver iodide content in the emulsion is 1.0 mol% or less, preferably 0.2 mol% or less. If the mean silver chloride content is lower than the above-mentioned limit, or if the silver iodide content is higher than the above-mentioned limit, the development speed of the photographic material is low and the material could not be applied to high-speed processing. Accordingly, the silver chloride content in the emulsions for use in the present invention is preferably higher. For instance, it is preferably 95 mol% or more. On the other hand, for the purpose of reducing the amount of the developer replenisher to be used in developing the photographic material of the present invention, the silver chloride content in the silver halide emulsion may preferably be further elevated. In the case, an almost pure silver chloride emulsion having a silver chloride content of from 98 mol% to 99.9 mol% may preferably be used. However, where a completely pure silver chloride emulsion is used, there would often occur some disadvantageous problems that the sensitivity could not be sufficiently elevated or stress marks could not be prevented.

In accordance with the present invention, the dyes of the formula (A) are preferably employed along

with a binder.

As hydrophilic colloid materials which are used as a binder for the purpose, there are mentioned gelatin, gelatin substitutes, collodion, gum arabi, cellulose ester derivatives such as alkyl esters of carboxylated cellulose, hydroxyethyl cellulose or carboxymethylhydroxyethyl cellulose, synthetic resins such as amphoteric copolymers described in Clavier et al's U.S. Patent 2,949,442 (as issued on August 16, 1960), polyvinyl alcohol, and other materials well known in this technical field.

As examples of high polymeric gelatin-substitutes, there are mentioned copolymer of allylamine and methacrylic acid; copolymer of allylamine, acrylic acid and acrylamide; hydrolyzed copolymer of allylamine, methacrylic acid and vinyl acetate; copolymer of allylamine, acrylic acid and styrene; and copolymer of allylamine, methacrylic acid and acrylonitrile.

In the preferred silver halide grains for use in the present invention, the other composition than silver chloride is almost silver bromide. In the case, silver bromide may be contained in the silver halide grains uniformly (of that is, one grain is formed of a so-called uniform solid solution of silver chlorobromide); or alternatively, the silver bromide content may form a different phase from the silver chloride phase in one grain. In the latter case, the grain may be a so-called laminate grain where the halogen composition of the core is different from that of the surrounding one or more shells; or alternatively, the grain may be such that localized phases each having a different silver bromide content (preferably having a higher silver bromide content) are discontinuously formed on the surface of the grain and/or in the inside thereof. Such localized phases having a high silver bromide content may be in the inside of the grain or on the edges, corners or surfaces of the grain. As one preferred embodiment, the localized phases are on the corners of the grain by epitaxial junction.

The mean grain size of he grains in the silver halide emulsions for use in the present invention (which indicates a mean value of diameters of spheres having the same volume as the grains) is preferably from 0.1 $\mu$m to 2 $\mu$m. Especially preferably, it is from 0.15 $\mu$m to 1.4 $\mu$m.

The grain size distribution is preferably narrow, and a monodisperse emulsion is preferred. In particular, a monodisperse emulsion having regular grains is preferred for use in the present invention. Above all, an emulsion where 85% or more, especially preferably 90% or more, by number or by weight of the total grains have a grain size falling within the range of the mean grain size plus/minus 20% is preferred.

The above-mentioned grains which are preferably used in the present invention are desirably prepared on the basis of a double jet method.

Where silver halide grains are physically ripened in the presence of known silver halide solvents (for example, ammonia, potassium thiocyanate, or thioethers and thione compounds described in U.S. Patent 3,271,157, JP-A-51-12360, JP-A-53-82408, JP-A-53-144319, JP-A-54-100717 or JP-A-54-155828), monodisperse silver halide emulsions containing regular crystalline grains and having a narrow grain size distribution are obtained, and such emulsions are preferably employed in the present invention.

The silver halide emulsions for use in the present invention can be chemically sensitized by sulfur-sensitization, selenium-sensitization, reduction sensitization and/or noble metal-sensitization. For instance, a sulfur-sensitization method of using an active gelatin or a sulfur-containing compound capable of reacting with silver ion (e.g., thiosulfates, thiourea compounds, mercapto compounds, rhodanine compounds); a reduction-sensitization method of using a reducing substance (e.g., stannous salts, amines, hydrazine derivatives, formamidine-sulfinic acids, silane compounds); and a noble metal-sensitization method of using a noble metal compound (e.g., gold complexes, other complexes of metals of Group VIII of the Periodic Table such as Pt, Ir, Pd, Rh or Fe) can be employed singly or in combination thereof. Further, it is preferred to apply complexes of metals of Group VIII of the Periodic Table such as Ir, Rh or Fe to the matrix phase and the localized phase, separately or distributedly. Sulfur-sensitization or selenium-sensitization is especially preferably applied to the monodisperse silver chlorobromide emulsion of the present invention, whereupon addition of hydroxyazaindene compounds to the sensitization is also preferred.

In the present invention, use of spectral-sensitizing dyes is important. As the spectral-sensitizing dyes to be used in the present invention, there are cyanine dyes, merocyanine dyes and complex merocyanine dyes. Additionally, complex cyanine dyes, holopolar cyanine dyes, hemicyanine dyes, styryl dyes and hemioxonole dyes may also be used. As cyanine dyes, simple cyanine dyes, carbocyanine dyes, dicarbocyanine dyes, tricarbocyanine dyes and tetracarbocyanine dyes are used.

In particular, sensitizing dyes selected from those of the following formulae (I), (II) and (III) are preferably used for red-sensitization of infra-red sensitization. These sensitizing dyes are relatively chemically stable and may adsorb to the surfaces of silver halide grains relatively strongly. Characteristically, they are resistant to desorption from silver halide grains to be caused by action of co-existing coupler and other dispersions.

Preferably, at least two light-sensitive layers of at least three light-sensitive silver halide layers in the

photographic material of the present invention are spectral-sensitized with at least one sensitizing dye to be selected from the group of compounds of the formulae (I), (II) and (III), selectively in any wavelength range of from 660 to 690 nm, from 740 to 790 nm, from 800 to 850 nm and from 850 to 900 nm.

The wording " ... are spectral-sensitized selectively in an wavelength range of from 660 to 690 nm, from 740 to 790 nm, from 800 to 850 nm and from 850 to 900 nm" as referred to herein means that the main wavelength of one light source falls within anyone of the said wavelength ranges and that the sensitivity of the any one of the light-sensitive layer, as being spectral-sensitized in accordance with the main wavelength of the light source, at the main wavelength of the said light source is higher than the sensitivity of other light-sensitive layers at the same wavelength by at least 0.8 (as logarithmic expression). Accordingly, it is preferred that the main sensitive wavelength of the respective light-sensitive layers is planned to be separated from each other by at least 40 nm in accordance with the main wavelength of the light source to be used. Sensitizing dyes to be employed are to be such that may give a high sensitivity in the main wavelength and also give a sharp spectral sensitivity distribution in the same.

Next, sensitizing dyes of the formulae (I), (II) and (III) are mentioned in detail hereunder.

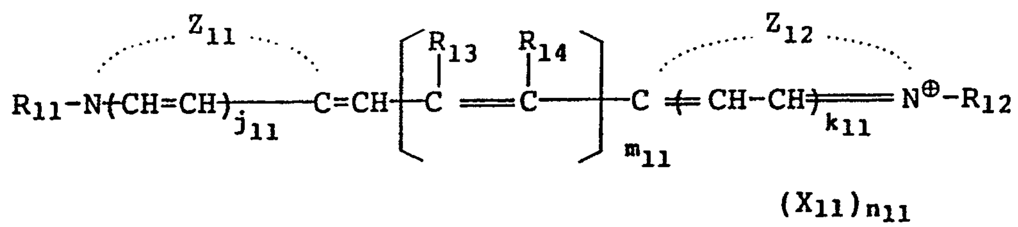

(I)

In the formula, $Z_{11}$ and $Z_{12}$ each represents an atomic group necessary for forming a heterocyclic nucleus.

As the heterocyclic nucleus, a 5-membered or 6-membered nucleus containing nitrogen atom(s) and optionally other sulfur, oxygen, selenium and/or tellurium atom(s) as hetero atoms is preferred, and the nucleus may be in the form of a condensed ring or may be substituted by substituent(s).

As examples of the heterocyclic nucleus, there are mentioned thiazole nucleus, benzothiazole nucleus, naphthothiazole nucleus, selenazole nucleus, benzoselenazole nucleus, naphthoselenazole nucleus, oxazole nucleus, benzoxazole nucleus, naphthoxazole nucleus, imidazole nucleus, benzimidazole nucleus, naphthoimidazole nucleus, 4-quinoline nucleus, pyrroline nucleus, pyridine nucleus, tetrazole nucleus, indolenine nucleus, benzindolenine nucleus, indole nucleus, tellurazole nucleus, benzotellurazole nucleus and naphthotellurazole nucleus.

$R_{11}$ and $R_{12}$ each represents an alkyl group, an alkenyl group, an alkynyl group or an aralkyl group. These groups and other groups to be mentioned below are intended to be substituted by substituent(s). For instance, as to the alkyl group, it may be unsubstituted or substituted and it may be linear, branched or cyclic. Preferably, the alkyl group has from 1 to 8 carbon atoms.

As examples of substituents for the substituted alkyl group, there are mentioned a halogen atom (e.g., chlorine, bromine, fluorine), a cyano group, an alkoxy group, a substituted or unsubstituted amino group, a carboxylic acid group, a sulfonic acid group and a hydroxyl group. The substituted alkyl group may be substituted by one or more of the substituents.

As an example of the alkenyl group, a vinylmethyl group is referred to.

As examples of the aralkyl group, a benzyl group and a phenethyl group are referred to.

$m_{11}$ represents a positive integer of 2 or 3.

$R_{13}$ represents a hydrogen atom, and $R_{14}$ represents a hydrogen atom, a lower alkyl group or an aralkyl group, or it may be bonded to $R_{12}$ to form a 5-membered or 6-membered ring. When $R_{14}$ is a hydrogen atom, $R_{13}$ may be bonded to other $R_{13}$ to form a hydrocarbon ring or a hetero ring. The ring is preferably a 5-membered or 6-membered one.

$j_{11}$ and $k_{11}$ each represents 0 or 1; $X_{11}$ represents an acid anion; and $n_{11}$ represents 0 or 1.

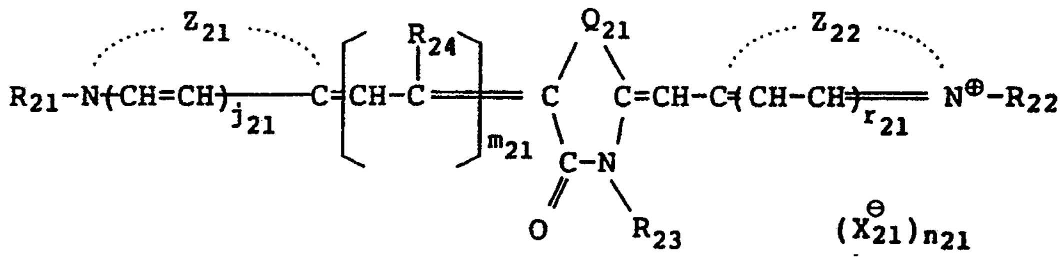

(II)

In the formula, $Z_{21}$ and $Z_{22}$ have the same meanings as those of the above-mentioned $Z_{11}$ and $Z_{12}$. $R_{21}$ and $R_{22}$ have the same meanings as those of the above-mentioned $R_{11}$ and $R_{12}$. $R_{23}$ represents an alkyl, alkenyl, alkynyl or aryl group (for example, a substituted or unsubstituted phenyl group). $m_{21}$ represents 2 or 3. $R_{24}$ represents a hydrogen atom, a lower alkyl group or an aryl group, or when $m_{21}$ is 2, $R_{24}$ and $R_{24}$ may be bonded to each other to form a hydrocarbon ring or a hetero ring. The ring is preferably a 5-membered or 6-membered one. $Q_{21}$ represents a sulfur atom, an oxygen atom, a selenium atom or $=N-R_{25}$; and $R_{25}$ has the same meaning as that of $R_{23}$. $j_{21}$, $r_{21}$, $X^{\ominus}_{21}$ and $n_{21}$ have the same meanings as $j_{11}$, $k_{11}$, $X_{11}$ and $n_{11}$, respectively.

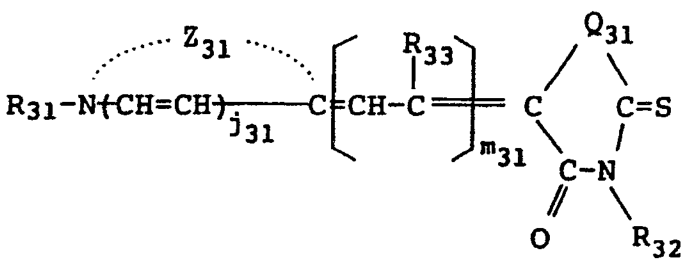

(III)

In the formula, $Z_{31}$ represents an atomic group necessary for forming a hetero ring. As examples of the ring, those mentioned for $Z_{11}$ and $Z_{12}$ are referred to. Additionally, there are further mentioned thiazolidine, thiazoline, benzothiazoline, naphthothiazoline, selenazolidine, selenazoline, benzoselenazoline, naphthoselenazoline, benzoxazoline, naphthoxazoline, dihydropyridine, dihydroquinoline, benzimidazoline and naphthoimidazoline nuclei. $Q_{31}$ has the same meaning as $Q_{21}$. $R_{31}$ has the same meaning as $R_{11}$ or $R_{12}$; and $R_{32}$ has the same meaning as $R_{23}$. $m_{31}$ represents 2 or 3. $R_{33}$ has the same meaning as $R_{24}$, or $R_{33}$ may be bonded to other $R_{33}$ to from a hydrocarbon ring or a hetero ring. $j_{31}$ has the same meaning as $j_{11}$.

Of the sensitizing dyes of the formula (I), those where $Z_{11}$ and/or $Z_{12}$ are/is a heterocyclic nucleus of a naphthothiazole, naphthoselenazole, naphthoxazole, naphthimidazole or 4-quinoline nucleus are preferred.

The same shall apply to $Z_{21}$ and/or $Z_{22}$ in the formula (II) and to the formula (III).

Additionally, sensitizing dyes where the methine chain forms a hydrocarbon ring or a hetero ring are preferred.

Infrared sensitization is effected by M-band of sensitizing dyes and therefore the spectral sensitivity distribution by infrared sensitization is generally broader than that by sensitization to be effected by J-band. Accordingly, a dye-containing colored colloid layer is provided in the side nearer to the surface to be exposed to light than the determined light-sensitive layer, in order to correct the spectral sensitivity distribution.

As red-sensitizing of infrared-sensitizing dyes, compounds having a reduction potential of -1.00 (V vs SCE) or more anodic compounds than the same are preferred. Sensitizing dyes having the characteristic are advantageous for elevation of the sensitivity, especially for stabilization of the elevated sensitivity and for stabilization of latent images formed.

Measurement of the reduction potential may be effected by the use of a phase differentiating second higher harmonics alternating current polarography, where a dropping mercury electrode is used as the working electrode, a saturated calomel electrode is as the reference electrode, and a platinum is as the counter electrode.

Measurement of reduction potential by phase differentiating second higher harmonics alternating current voltammetry, using a platinum as the working electrode, is described in Journal of Imaging Science, Vol. 30,

pages 27 to 35 (1986).

Specific examples of sensitizing dyes of the formulae (I), (II) and (III) are mentioned below.

( I − 1 )

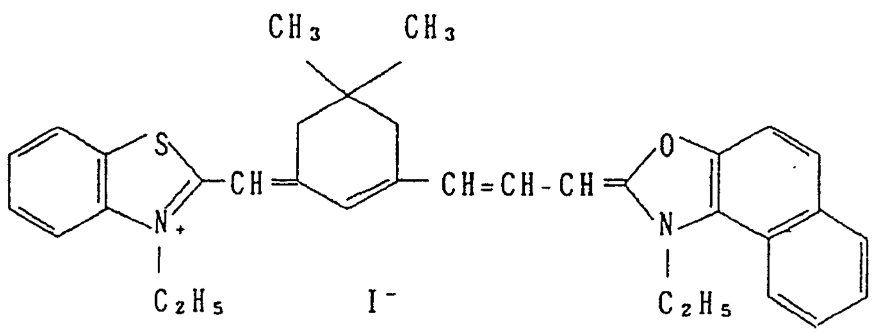

( I − 2 )

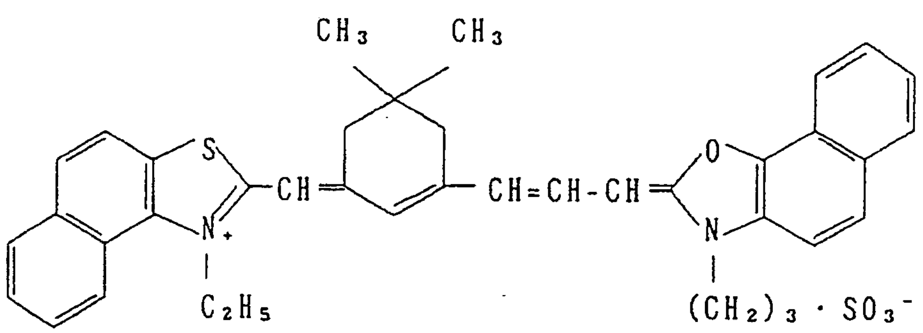

( I − 3 )

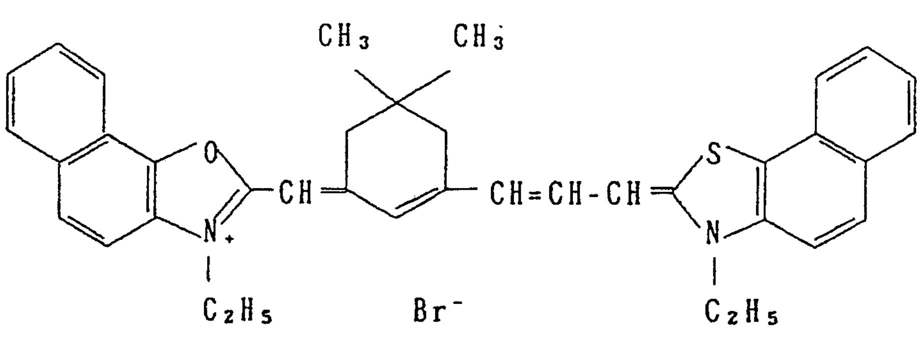

( I − 4 )

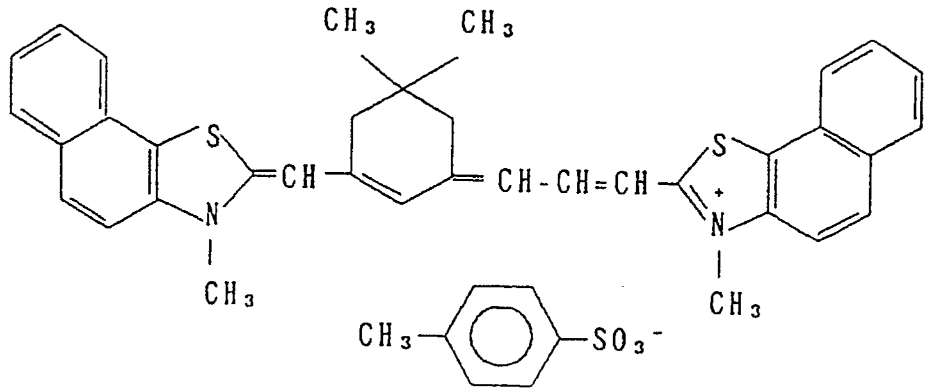

( I − 5 )

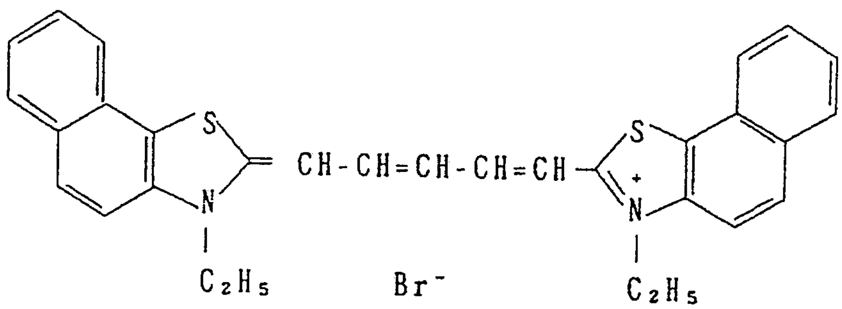

( I − 6 )

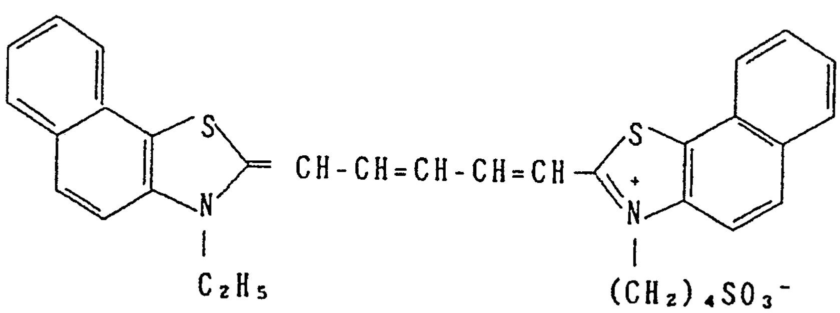

( I − 7 )

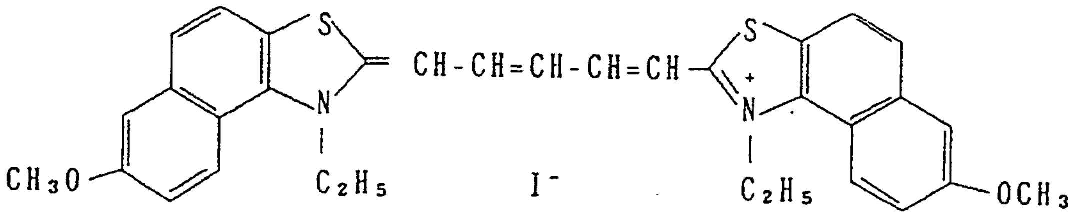

( I − 8 )

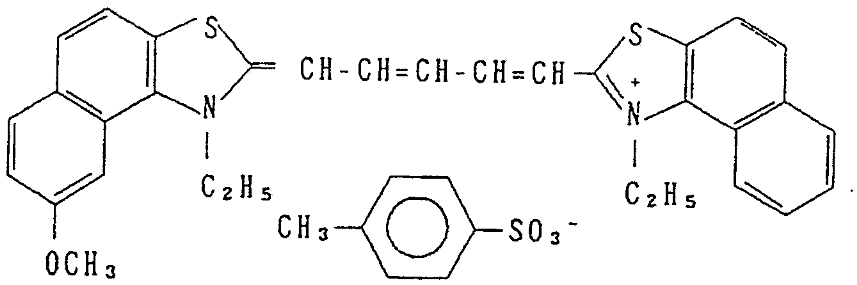

( I − 9 )

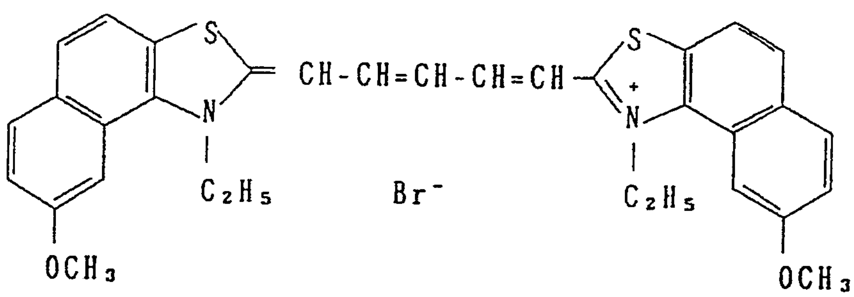

( I −10)

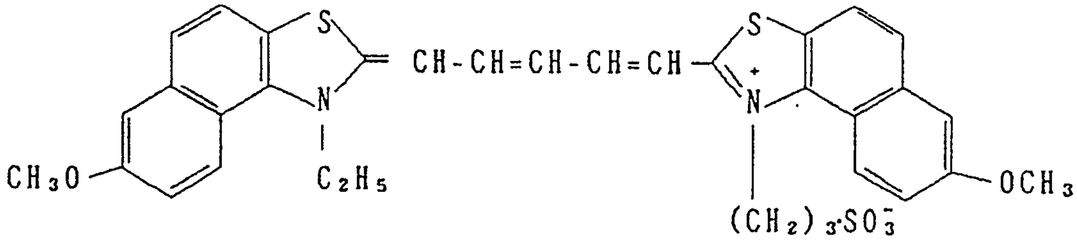

( I −11)

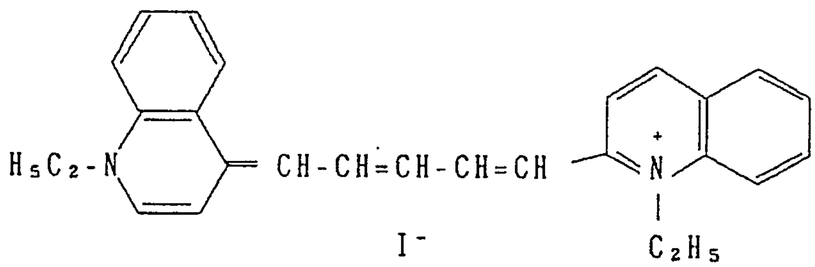

( I −12)

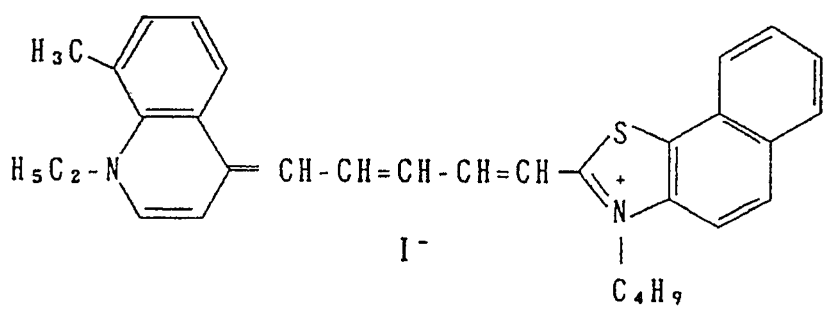

( I -13)

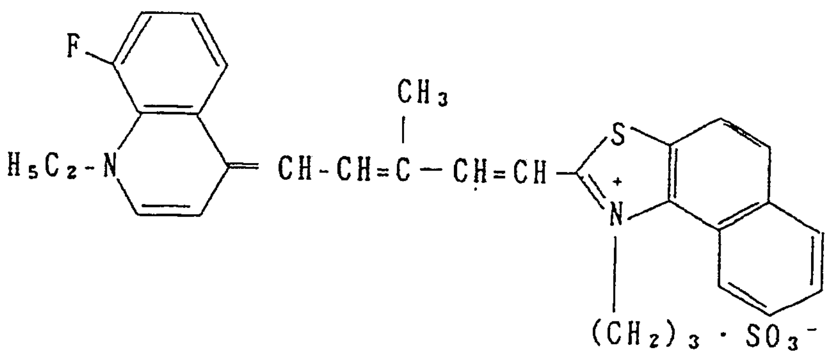

( I -14)

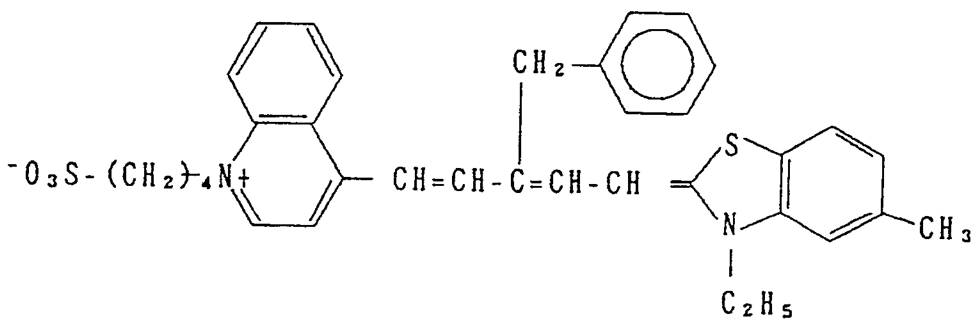

( I -15)

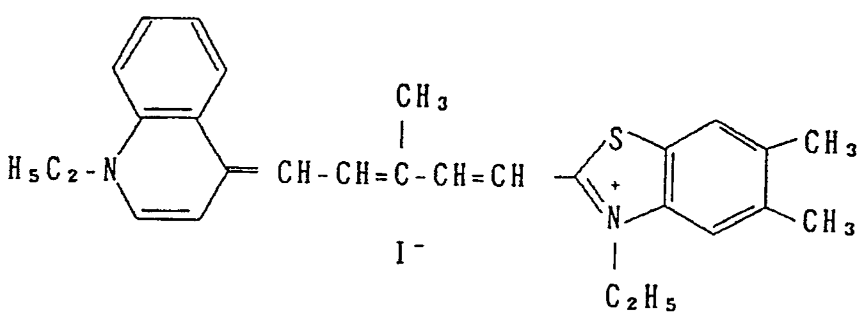

( I －16)

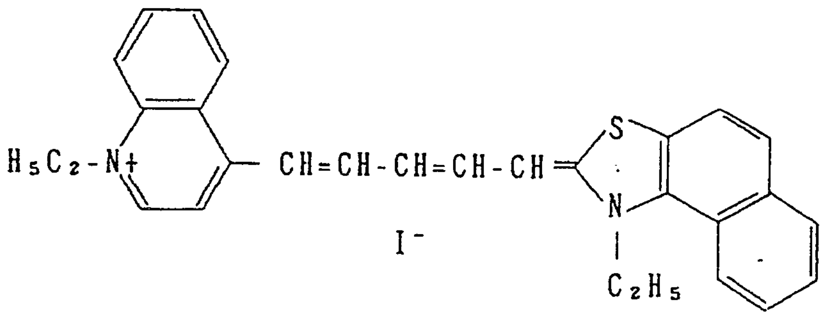

( I －17)

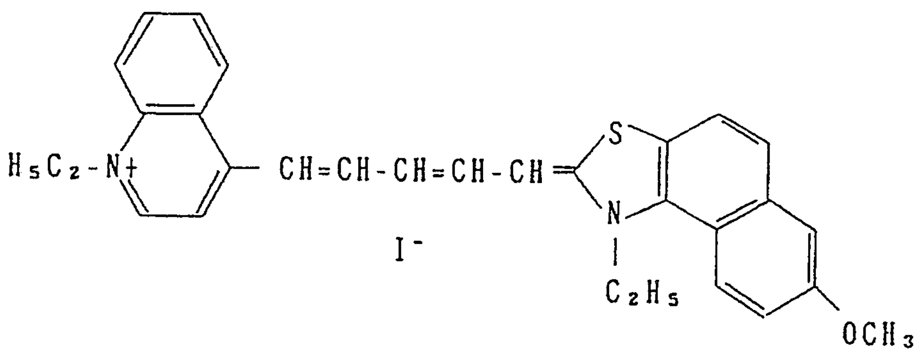

( I －18)

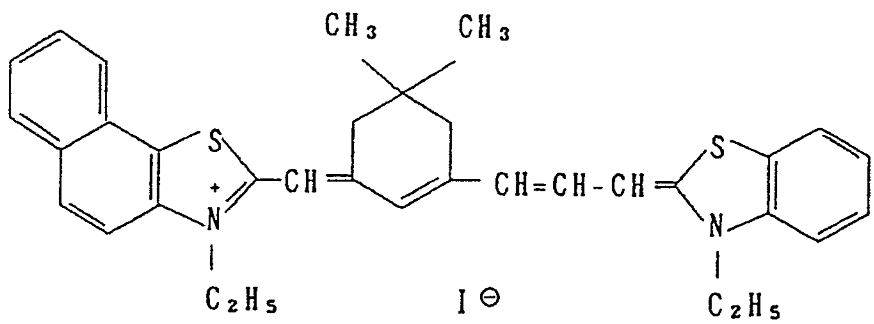

( I －19)

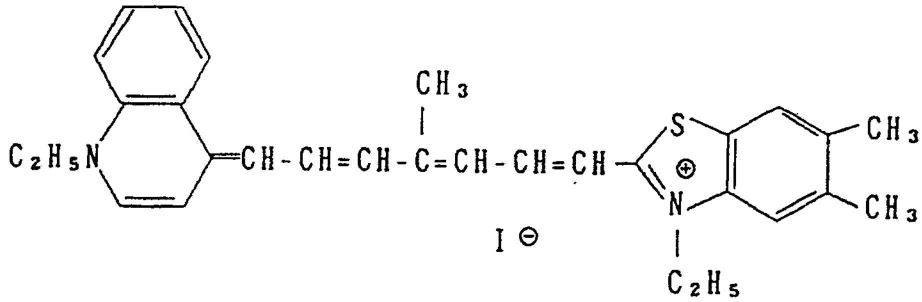

( II － 1 )

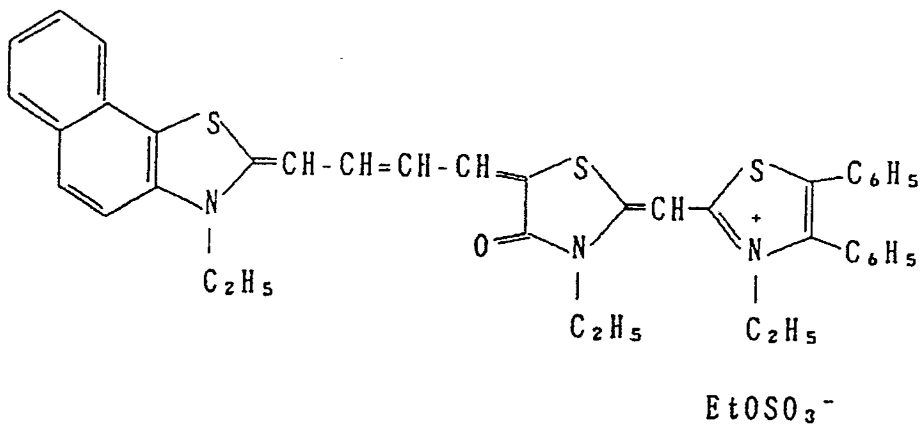

( II － 2 )

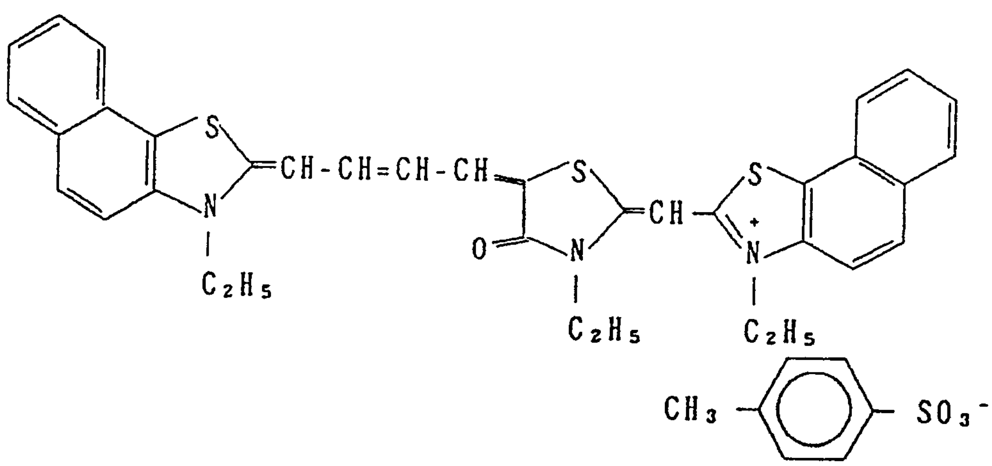

(Ⅱ－3)

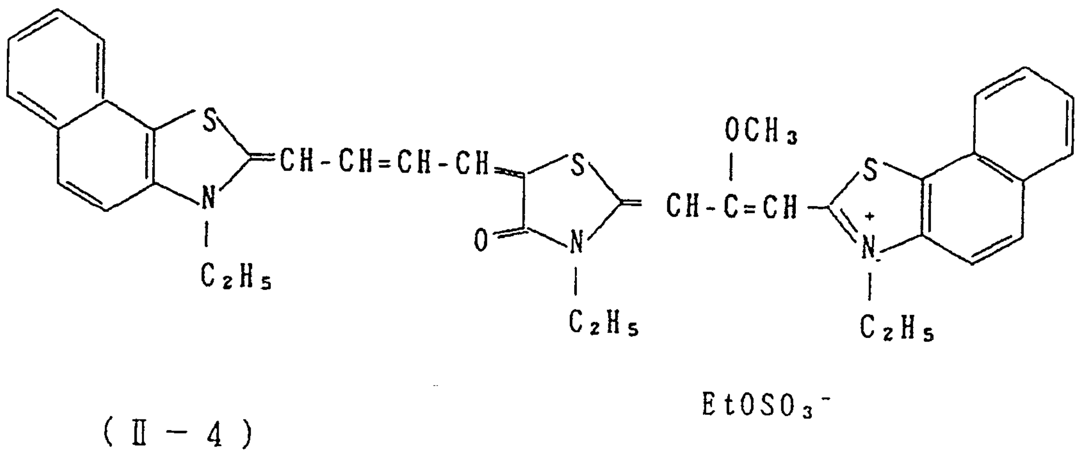

(Ⅱ－4)

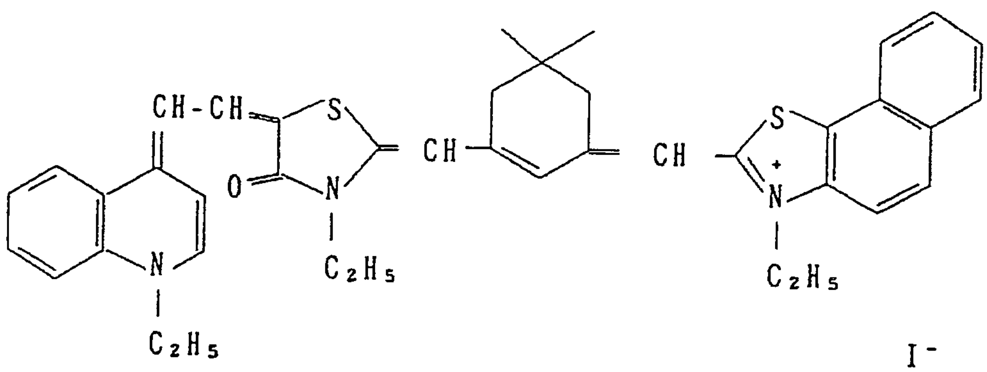

(Ⅱ－5)

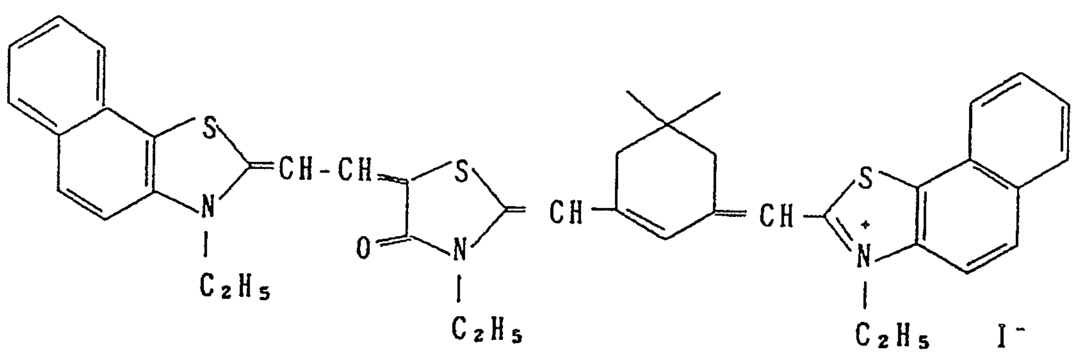

(Ⅱ－6)

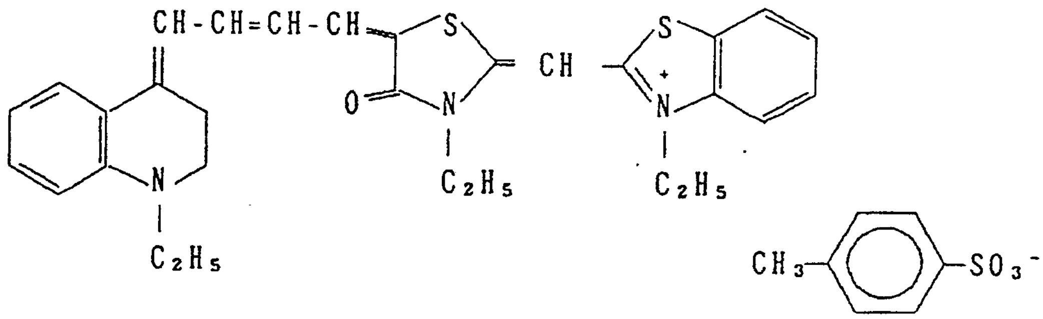

(Ⅲ－1)

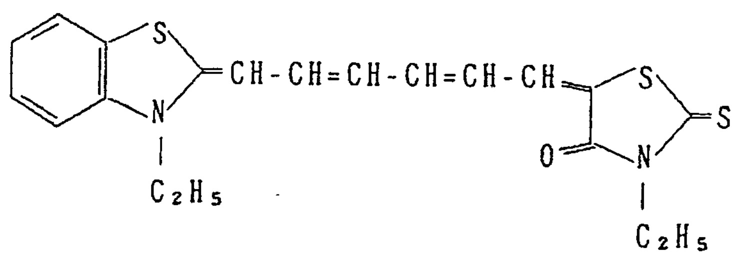

(Ⅲ－2)

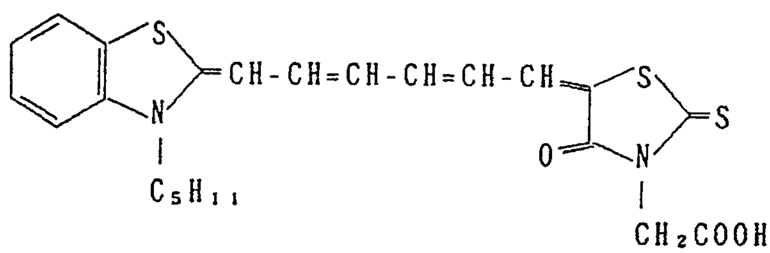

( II - 3 )

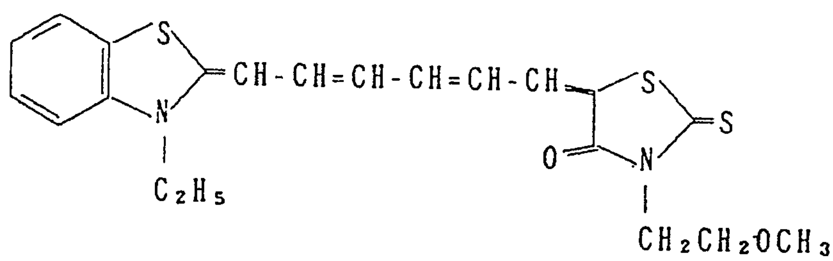

( II - 4 )

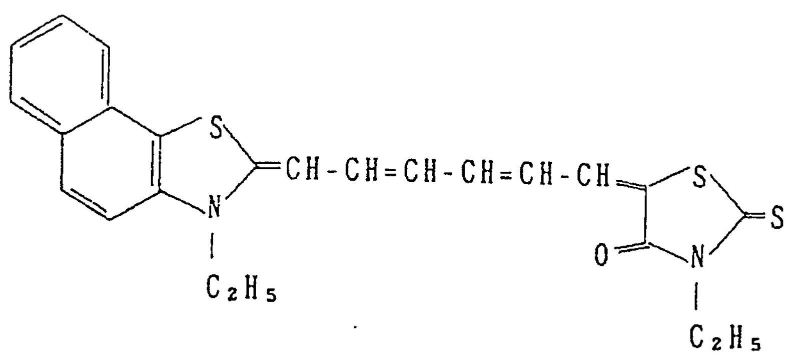

In accordance with the present invention, the sensitizing dyes are incorporated into silver halide photographic emulsions in a proportion of from $5x10^{-7}$ mol to $5x10^{-3}$ mol, preferably from $1x10^{-6}$ mol to $1x10^{-3}$ mol, especially preferably from $2x10^{-6}$ mol to $5x10^{-4}$ mol, per mol of silver halide.

The sensitizing dyes may directly be dispersed in emulsions. Alternatively, they may be first dissolved in a pertinent solvent, for example, methyl alcohol, ethyl alcohol, methyl cellosolve, acetone, water, pyridine or a mixed solvent thereof to be added to emulsions in the form of a solution thereof. In dissolving the dyes in the solvent, ultrasonic waves may be employed. As examples of methods of adding the infrared-sensitizing dyes to emulsion, there are mentioned a method described in U.S. Patent 3,469,987 where a dye is dissolved in a volatile organic solvent, the resulting solution is dispersed in a hydrophilic colloid, and the resulting dispersion is added to an emulsion; a method described in JP-B-46-24185 (the term "JP-B" as used herein means an "examined Japanese patent publication") where a water-insoluble dye is dispersed in a water-soluble solvent, without being previously dissolved, and the resulting dispersion is added to an emulsion; a method described in U.S. Patent 3,822,135 where a dye is dissolved in a surfactant and the resulting solution is added to an emulsion; a method described in JP-A-51-74624 where a dye is dissolved in a solvent in the presence of a red-shifting compound and the resulting solution is added to an emulsion; and a method described in JP-A-50-80826 where a dye is dissolved in a substantially water-free acid and the resulting solution is added to an emulsion. In addition, other various methods, for example, those described in U.S. Patents 2,912,343, 3,342,605, 2,996,287 and 3,429,835 may also be employed for adding sensitizing dyes to emulsions. If desired, the above-mentioned infrared-sensitizing dyes may be uniformly dispersed in silver halide emulsions before the emulsions are coated on a pertinent support. It is preferred that the dyes are added before chemical sensitization or in the latter stage of the step of forming silver halide grains.

In red-sensitization or infrared-sensitization in accordance with the present invention, the sensitizing dyes may be combined with the compounds described in JP-A-62-123454, from page 15, right-upper column, line 10 to page 20, left-lower column, line 19 for M-band sensitization, and such combination is preferred.

The silver halide photographic materials of the present invention can contain various compounds for the purpose of preventing lowering of the sensitivity and of preventing fogging, during manufacture, storage or processing of the materials. Additionally, they may contain a color coupler, a brightening agent, a hardening agent, a coating aid, a plasticizer, a slide preventing agent, a mat agent, a high boiling point organic solvent,

a stabilizer, development accelerator, and a stain inhibitor. Examples of these additives are described in Research Disclosure, Vol. 176 No. 17643 (December, 1978), Item I to XIV (pages 22 to 28).

Where the photographic materials of the present invention are color photographic materials, they preferably contain cyan, magenta and yellow couplers described in Japanese Patent Application No. 1-108217, pages 100 to 129. Regarding the dispersion media and dispersing methods for the couplers, the disclosure of Japanese Patent Application No. 1-108217, pages 129 to 132 shall apply to the present invention. Regarding the means of processing the color photographic materials, the disclosure of Japanese Patent Application No. 1-108217, from page 144, line 8 to page 168, line 11 shall apply to the present invention. Regarding the scanning exposure light sources to be applied to the color photographic materials, the disclosure of Japanese Patent Application No. 1-108217, from page 168, line 12 to page 170, line 9 shall apply to the present invention. Regarding the layer constitutions of the color photographic materials, the disclosure of Japanese Patent Application No. 1-108217, from page 171, line 1 to page 172 shall apply to the present invention.

Next, the present invention will be explained in more detail by way of the following examples, which, however, are not intended to restrict the scope of the present invention.

EXAMPLE 1

Preparation of Emulsion:

3.3 g of sodium chloride was added to an aqueous 3% solution of a lime-processed gelatin, and 3.2 ml of an aqueous 1% solution of N,N'-dimethylimidazolidine-2-thione was added thereto. To the resulting aqueous solution were added an aqueous solution containing 0.2 mol of silver nitrate and an aqueous solution containing 0.2 mol of sodium chloride and 15 $\mu$g of rhodium trichloride with vigorously stirring at 56°C and blended. Subsequently, an aqueous solution containing 0.780 mol of silver nitrate and an aqueous solution containing 0.780 mol of sodium chloride and 4.2 mg of potassium ferrocyanide were added thereto also with vigorously stirring at 56°C and blended. Five minutes after addition of the aqueous silver nitrate solution and the aqueous alkali halide solution, an aqueous solution containing 0.020 mol of silver nitrate and an aqueous solution containing 0.015 mol of potassium bromide, 0.005 mol of sodium chloride and 0.8 mg of potassium hexachloroiridate(IV) were further added also with vigorously stirring at 40°C and blended. Afterwards, the resulting blend was desalted and washed with water. Additionally, 90.0 g of a lime-processed gelatin was added thereto, and then triethylthiourea was added thereto for effecting optimum chemical sensitization.

The thus obtained silver chlorobromide emulsion (A) was observed with an electromicroscope, and the shape of the grains, the grain size and the grain size distribution were obtained from the electromicroscopic photograph. All the silver halide grains were cubic in the emulsion, the grain size was 0.52 $\mu$m and the coefficient of variation was 0.08. The grain size was represented by a mean value of diameters of circles having the same projected area as the grains. The grain size distribution was represented by a value as obtained by dividing the standard deviation of the grain size by the mean grain size.

Next, by measuring the X-ray diffraction from the silver halide crystals, the halogen composition of the emulsion grains was determined. Precisely, the diffraction angle from (200) plane was measured in detail by the use of a monochromatisized CuK$\alpha$ ray as a ray source. The diffraction ray from a crystal having a uniform halogen composition gives a single peak, while the diffraction ray from a crystal having localized phases of different halogen compositions gives plural peaks corresponding to the respective compositions. From the diffraction angle of the peak thus measured, the lattice constant is calculated out, whereby the halogen composition of the silver halide of constituting the crystal is determined. As a result of measurement of the silver chlorobromide emulsion (A), a main peak to indicate 100% silver chloride along with a broad diffraction pattern where the center indicates 70% silver chloride (or 30% silver bromide) and it extends to the foot to indicate 60% silver chloride (or 40% silver bromide) was observed.

Preparation of Photographic Materials:

Plural layers mentioned below were coated on a paper support having been laminated with polyethylene on both surfaces thereof to prepare multi-layer color photographic material samples. Coating compositions for layers were prepared as mentioned below.

Preparation of First Layer-Coating Composition:

27.2 g of ethyl acetate and 8.2 g of solvent (Solv-1) were added to 19.1 g of yellow coupler (ExY), 4.4 g

of color image stabilizer (Cpd-1) and 0.7 g of color image stabilizer (Cpd-7) and dissolved, and the resulting solution was emulsified and dispersed in 185 ml of an aqueous 10% gelatin solution containing 8 ml of 10% sodium dodecylbenzenesulfonate. On the other hand, the following red-sensitizing dye (Dye-1) was added to the silver chlorobromide emulsion (A) to prepare an emulsion. The previously prepared emulsified dispersion and the emulsion was blended to give a first layer-coating composition having the following components.

The other second layer-coating composition to seventh layer-coating composition were prepared in the same manner as in preparation of the above-mentioned first layer-coating composition. As the gelatin hardening agent in the respective layers, 1-hydroxy-3,5-dichloro-s-triazine sodium salt was employed.

The following spectral-sensitizing dyes were added to the light-sensitive layers.

First Layer: Red-Sensitive Yellow-Coloring Layer

(Dye-1)

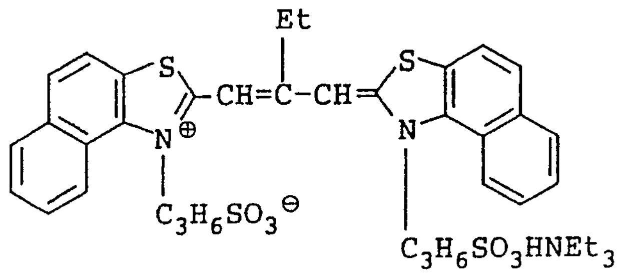

($1.0\times10^{-4}$ mol per mol of silver halide)

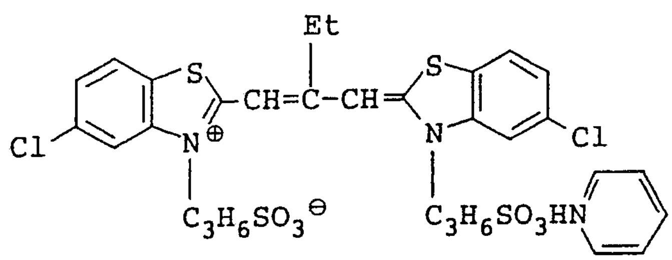

($1.0\times10^{-4}$ mol per mol of silver halide)

Third Layer: Infrared-Sensitive Magenta-Coloring Layer

(Dye-2)

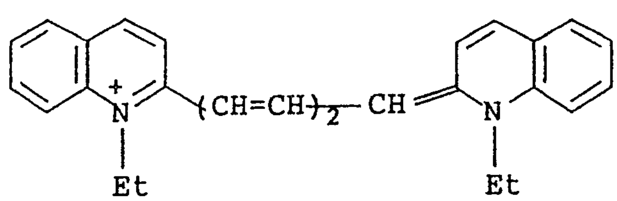

($4.5\times10^{-5}$ mol per mol of silver halide)

Fifth Layer: Infrared-Sensitive Cyan-Coloring Layer

(Dye-3)

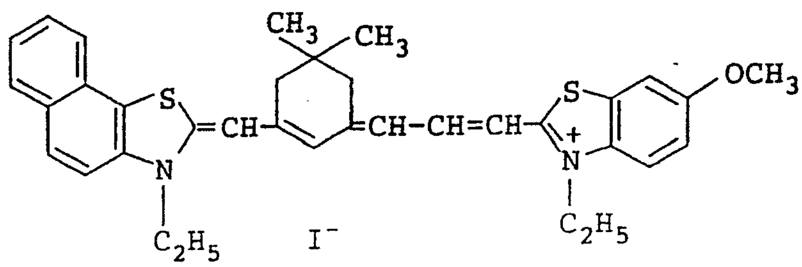

($0.5\times10^{-5}$ mol per mol of silver halide)

Where (Dye-2) and (Dye-3) were used, the following compound was added in an amount of $1.8\text{x}10^{-3}$ mol per mol of silver halide.

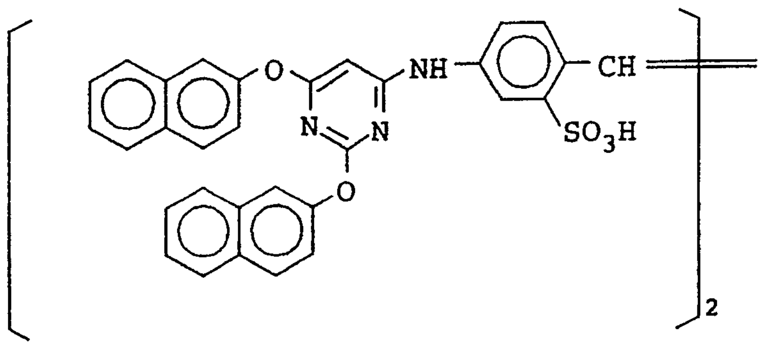

Additionally, $8.0\text{x}10^{-4}$ mol per mol of silver halide of 1-(5-methylureidophenyl)-5-mercaptotetrazole was added to the yellow-coloring emulsion layer, magenta-coloring emulsion layer and cyan-coloring emulsion layer.

The following dye and the dye as indicated in Table 1 below were added to the emulsion layers for anti-irradation.

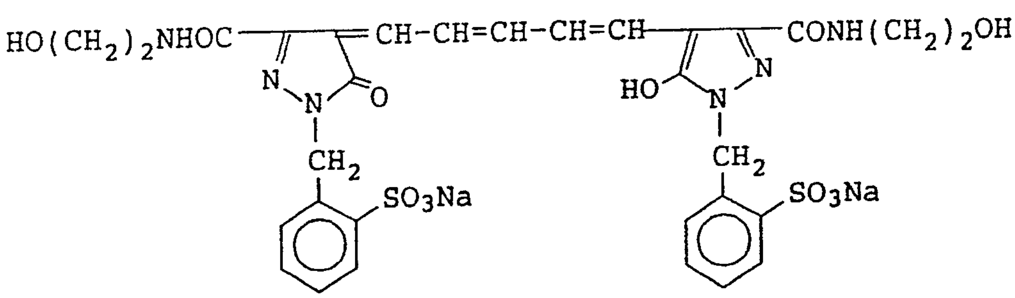

Layer Constitution:

Compositions of the layers to be coatd on the support are mentioned below. The number indicates the amount coated (as unit of $g/m^2$). The amount of silver halide emulsion coated is represented by the amount of silver in the emulsion coated.

Support:

Polyethylene-Laminated Paper (containing white pigment ($TiO_2$) and bluish dye (ultramarine) in the polyethylene laminated on the surface to be coated with first layer)

<u>First Layer</u>: Red-Sensitive Yellow-Coloring Layer

| | |
|---|---|
| Above-mentioned silver chlorobromide emulsion (A) | 0.30 |
| Gelatin | 1.86 |
| Yellow coupler (ExY) | 0.82 |
| Color image stabilizer (Cpd-1) | 0.19 |
| Solvent (Solv-1) | 0.35 |
| Color image stabilizer (Cpd-7) | 0.06 |

<u>Second Layer</u>: Color Stain Preventing Layer

| | |
|---|---|
| Gelatin | 0.99 |
| Color stain preventing agent (Cpd-5) | 0.08 |
| Solvent (Solv-1) | 0.16 |
| Solvent (Solv-4) | 0.08 |

<u>Third Layer</u>: Infrared-Sensitive Magenta-Coloring Layer

| | |
|---|---|
| Silver chlorobromide emulsion (A) | 0.12 |
| Gelatin | 1.24 |
| Magenta coupler (ExM) | 0.20 |
| Color image stabilizer (Cpd-2) | 0.03 |
| Color image stabilizer (Cpd-3) | 0.15 |
| Color image stabilizer (Cpd-4) | 0.02 |
| Color image stabilizer (Cpd-9) | 0.02 |
| Solvent (Solv-2) | 0.40 |

<u>Fourth Layer</u>: Ultraviolet Absorbing Layer

| | |
|---|---|
| Gelatin | 1.58 |
| Ultraviolet absorbent (UV-1) | 0.47 |

| | |
|---|---|
| Color stain preventing agent (Cpd-5) | 0.05 |
| Solvent (Solv-5) | 0.24 |

Fifth Layer: Infrared-Sensitive Cyan-Coloring Layer

| | |
|---|---|
| Silver chlorobromide emulsion (A) | 0.23 |
| Gelatin | 1.34 |
| Cyan coupler (ExC) | 0.32 |
| Color image stabilizer (Cpd-6) | 0.17 |
| Color image stabilizer (Cpd-7) | 0.40 |
| Color image stabilizer (Cpd-8) | 0.04 |
| Solvent (Solv-6) | 0.15 |

Sixth Layer: Ultraviolet Absorbing Layer

| | |
|---|---|
| Gelatin | 0.53 |
| Ultraviolet absorbent (UV-1) | 0.16 |
| Color stain preventing agent (Cpd-5) | 0.02 |
| Solvent (Solv-5) | 0.08 |

Seventh Layer: Protective Layer

| | |
|---|---|
| Gelatin | 1.33 |
| Acryl-modified copolymer of polyvinyl alcohol (modification degree 17%) | 0.17 |
| Liquid paraffin | 0.03 |

Compounds used in preparing the photographic material samples were as follows.

Yellow coupler (ExY):

1:1 mixture (by mol) of the following compounds.

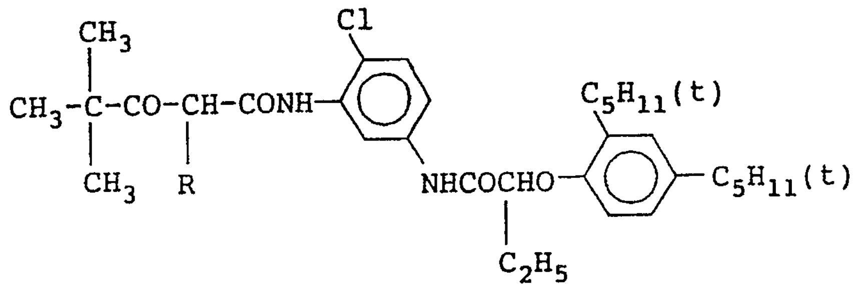

R = 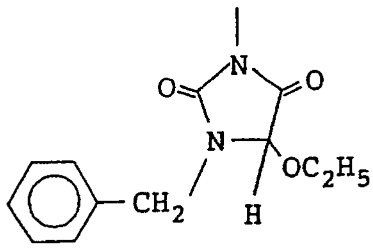

R = 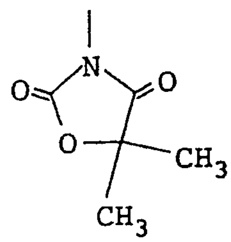

Magenta coupler (ExM):

1:1 mixture (by mol) of the following compounds.

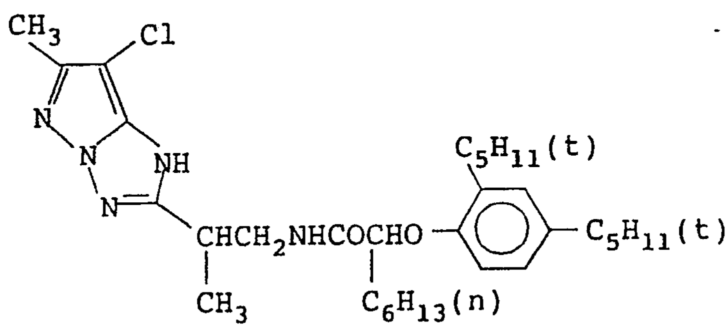

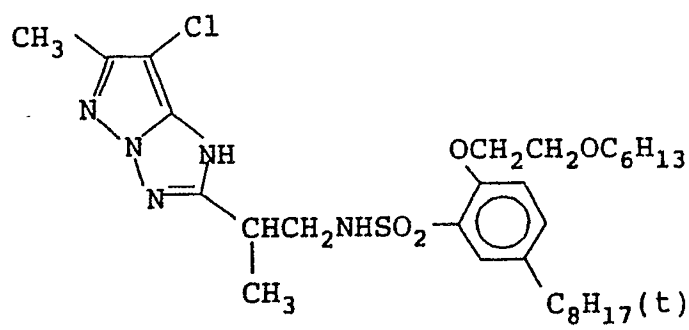

Cyan coupler (ExC):

2:4:4 mixture (by weight) of the following compounds.

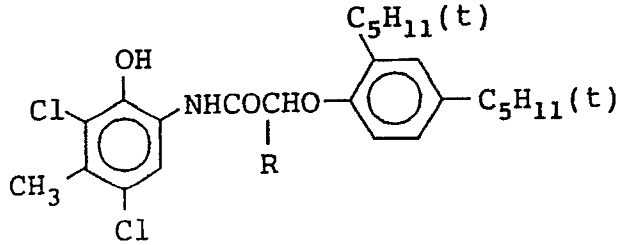

$R=C_2H_5$;  $C_4H_9$

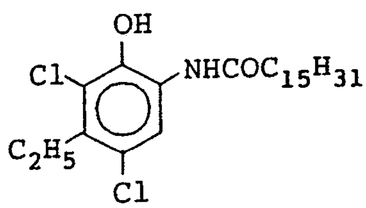

Color Image Stabilizer (Cpd-1):

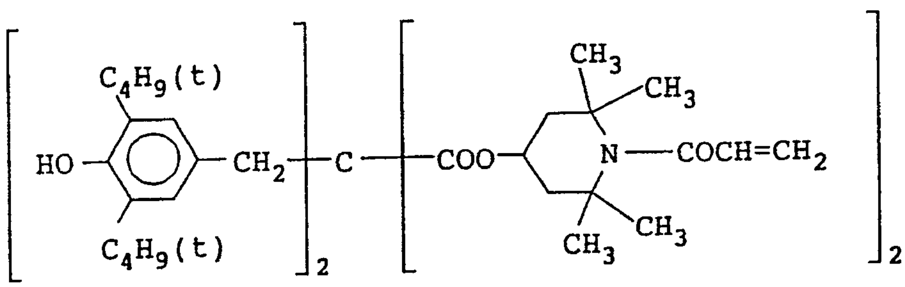

Color Image Stabilizer (Cpd-2):

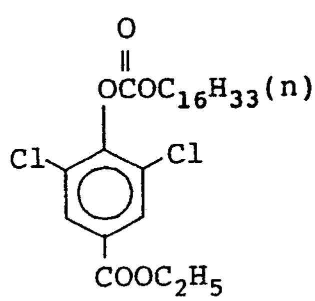

Color Image Stabilizer (Cpd-3]:

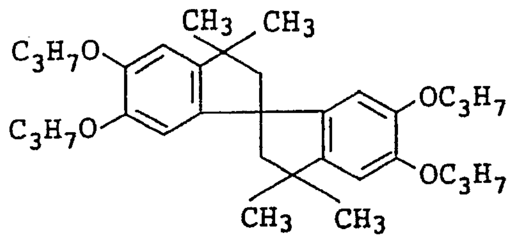

Color Image Stabilizer (Cpd-4):

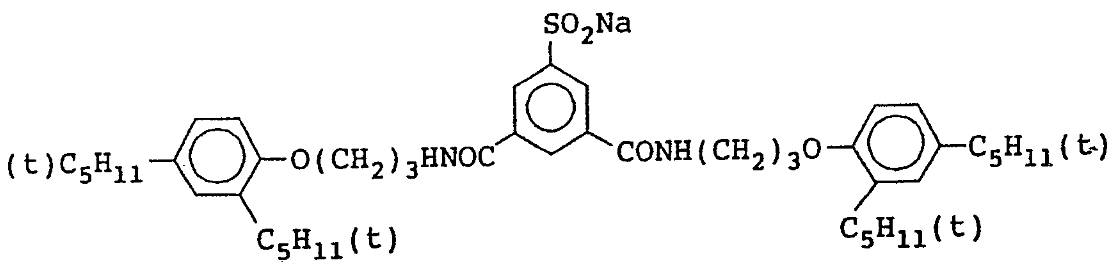

Color Stain Preventing Agent (Cpd-5):

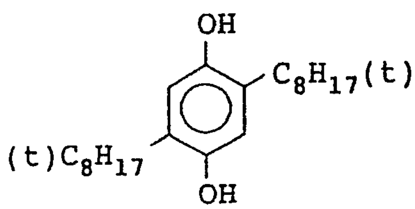

Color Image Stabilizer (Cpd-6):

2:4:4 mixture (by weight) of the following compounds.

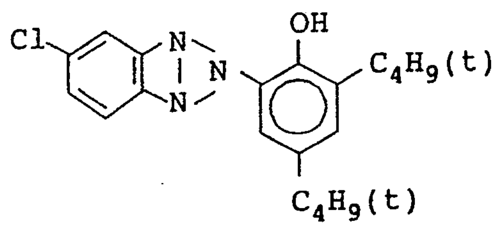

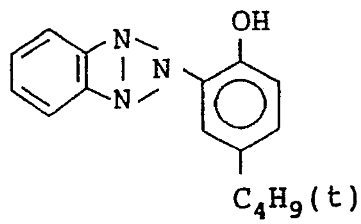

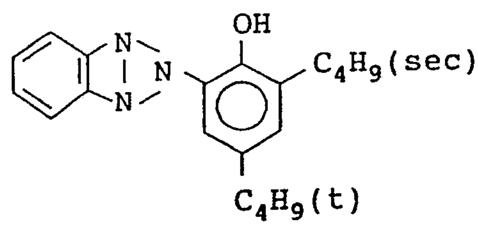

Color Image Stabilizer (Cpd-7):

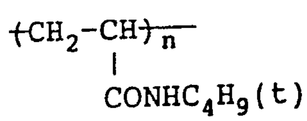

(mean molecular weight 60,000)

Color Image Stabilizer (Cpd-8):

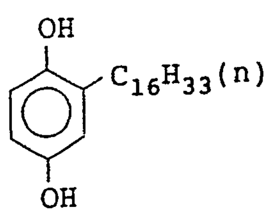

Color Image Stabilizer (Cpd-9):

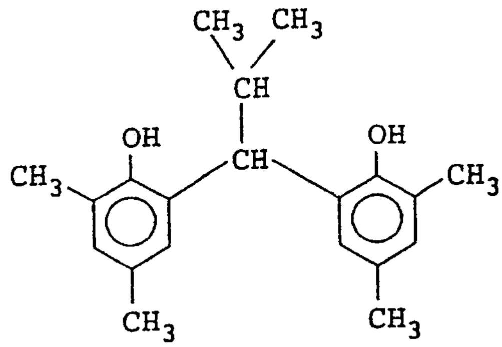

Ultraviolet Absorbent (UV-1):

4:2:4 mixture (by weight) of the following compounds.

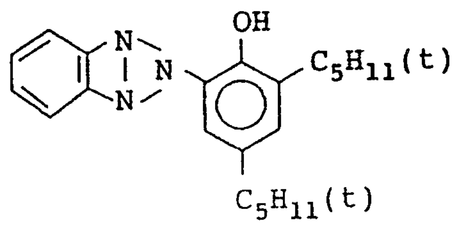

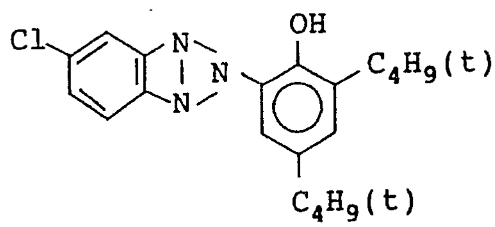

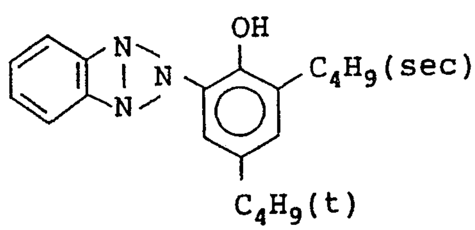

Solvent (Solv-1):

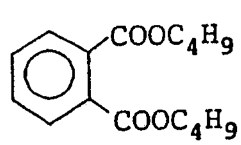

Solvent (Solv-2):

2:1 mixture (by volume) of the following compounds.

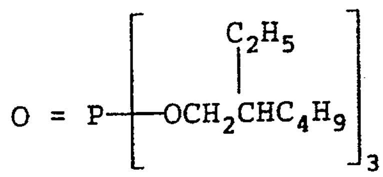

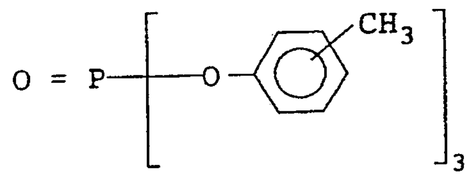

Solvent (Solv-4):

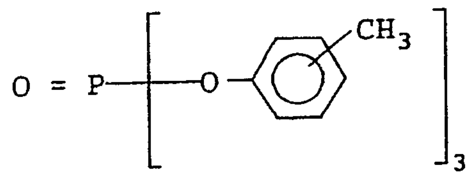

Solvent (Solv-5):

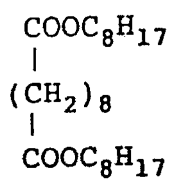

Solvent (Solv-6):

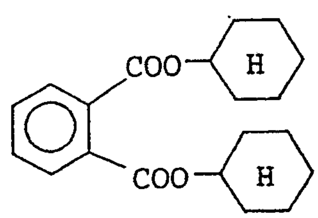

Evaluation of Storage Stability:

The photographic material samples as prepard by the method mentioned above and shown in Table 1 below were stored at a temperature of 50° C and a humidity of 80% for 2 days, and the reflection spectrum of each sample was measured, whereupon the variation of the light absorption percentage at the absorption maximum wavelength of each dye (which is represented by (absorption percentage of sample stored at 50° C and 80% RH)/(absorption percentage of sample before stored)) was obtained and shown in Table 1.

Evaluation of Decolorability:

The photographic material samples shown in Table 1 were subjected to image forming process in accordance with the method mentioned below, whereupon the reflection spectrum of the white background

portion of each sample was measured. The light absorption percentage of the processed sample at the absorption maximum of the dye contained in the sample was compared with that of the non-processed sample, whereby the percentage of the color retension of the dye in each sample was calculated and shown in Table 1.

Exposure:

Semiconductor laser AlGaInP (oscillating wavelength: about 670 nm), semiconductor laser GaAlAs (oscillating wavelength: about 750 nm) and semiconductor laser GaAlAs (oscillating wavelength: about 810 nm) were used for exposing the color photographic material samples by scanning exposure. Precisely, each sample was moved vertically to the scanning direction by the use of a rotary polyhedron, and each sample was exposed in order with the laser rays from the laser. In the exposing operation, the exposure time with the semiconductor laser and the radiation amount of the laser were electrically controlled.

Color Development (A):

The exposed samples were then processed by the use of a color paper-processing apparatus by continuous processing, which was continued until the amount of the color developer replenisher to the development tank became two times of the development tank (running test). Afterwards, the photographic material samples of the present invention and comparative samples (Table 1) were processed with the thus fatigued and aged processing system. The thus processed samples were examined to evaluate the color retention percentage.

| Processing Step | Temperature | Time | Amount of Replenisher* | Tank Capacity |
|---|---|---|---|---|
| Color Development | 35°C | 45 sec. | 161 ml | 17 ℓ |
| Bleach-Fixation | 30-35°C | 45 sec. | 215 ml | 17 ℓ |
| Rinsing (1) | 30-35°C | 20 sec. | - | 10 ℓ |
| Rinsing (2) | 30-35°C | 20 sec. | - | 10 ℓ |
| Rinsing (3) | 30-35°C | 20 sec. | 350 ml | 10 |
| Drying | 70-80°C | 60 sec. | | |

(*) Amount of replenisher was per $m^2$ of sample being processed. Rinsing was effected by 3-tank counter-current system from rinsing tank (3) to rinsing tank (1).

The processing solutions used had the following compositions.

Color Developer:

| | Mother Solution | Replenisher |
|---|---|---|
| Water | 800 ml | 800 ml |
| Ethylenediamine-N,N,N,N-tetramethylenephosphonic acid | 1.5 g | 2.0 g |
| Potassium bromide | 0.015 g | - |
| Triethanolamine | 8.0 g | 12.0 g |
| Sodium chloride | 1.4 g | - |
| Potassium carbonate | 25 g | 25 g |
| N-Ethyl-N-(β-methanesulfonamido-ethyl)-3-methyl-4-aminoaniline sulfate | 5.0 g | 7.0 g |
| N,N-Bis(carboxymethyl)hydrazine | 5.0 g | 7.0 g |
| Brightening agent (Whitex 4B, manufactured by Sumitomo Chemical Company, Limited) | 1.0 g | 2.0 g |
| Water to make | 1000 ml | 1000 ml |
| pH (25°C) | 10.05 | 10.45 |

Bleach-fixing Solution: Mother solution and replenisher were same.

| | |
|---|---|
| Water | 400 ml |
| Ammonium Thiosulfate (700 g/liter) | 100 ml |
| Sodium sulfite | 17 g |
| Ammonium ethylenediaminetetraacetato ferrate | 55 g |
| Disodium ethylenediaminetetraacetate | 5 g |
| Ammonium bromide | 40 g |
| Water to make | 1000 ml |
| pH (25°C) | 6.0 |

Rinsing Solution: Mother solution and replenisher were same.
Ion-exchanged water (having 3 ppm or less calcium and 3 ppm or less magnesium).

Color Development (B):

Exposed samples were color-developed by the use of a paper-processing apparatus, in accordance with the procedure mentioned below.

| Processing Step | Temper-ature | Time | Amount of Reple-nisher* | Tank Capacity |
|---|---|---|---|---|
| Color Development | 35°C | 20 sec. | 60 ml | 2 ℓ |
| Bleach-Fixation | 30-35°C | 20 sec. | 60 ml | 2 ℓ |
| Rinsing (1) | 30-35°C | 10 sec. | - | 1 ℓ |
| Rinsing (2) | 30-35°C | 10 sec. | - | 1 ℓ |
| Rinsing (3) | 30-35°C | 10 sec. | 120 ml | 1 ℓ |
| Drying | 70-80°C | 20 sec. | | |

(*) Amount of replenisher was per $m^2$ of sample being processed. Rinsing was effected by 3-tank counter-current system from rinsing tank (3) to rinsing tank (1).

The processing solutions used had the following compositions.

Color Developer:

| | Mother Solution | Replenisher |
|---|---|---|
| Water | 800 ml | 800 ml |
| Ethylenediamine-N,N,N,N-tetramethylenephosphonic acid | 1.5 g | 2.0 g |
| Potassium bromide | 0.015 g | - |
| Triethanolamine | 8.0 g | 12.0 g |

| | | |
|---|---|---|
| Sodium chloride | 4.9 g | - |
| Potassium carbonate | 25 g | 37 g |
| 4-Amino-3-methyl-N-ethyl-N-(3-hydroxypropyl)aniline-2-p-toluenesulfonic acid | 12.8 g | 19.8 g |
| N,N-Bis(carboxymethyl)hydrazine | 5.5 g | 7.0 g |
| Brightening agent (Whitex 4B, manufactured by Sumitomo Chemical Company, Limited) | 1.0 g | 2.0 g |
| Water to make | 1000 ml | 1000 ml |
| pH (25°C) | 10.05 | 10.45 |

Bleach-fixing Solution: Mother solution and replenisher were same.

| | |
|---|---|
| Water | 400 ml |
| Ammonium thiosulfate (700 g/ℓ) | 100 ml |
| Sodium sulfite | 17 g |
| Ammonium ethylenediaminetetraacetato ferrate | 55 g |
| Disodium ethylenediaminetetraacetate | 5 g |
| Ammonium bromide | 40 g |
| Water to make | 1000 ml |
| pH (25°C) | 6.0 |

Rinsing Solution: Mother solution and replenisher were same.
Ion-exchanged water (having 3 ppm or less calcium and 3 ppm or less magnesium).

Table 1

| Photographic Material Sample | Dye | Amount of Dye Added ($mol/m^2$) | Percentage of Dye Remained (%) | Percentage of Color Retention Process (A) (%) | Percentage of Color Retention Process (B) (%) | Note |
|---|---|---|---|---|---|---|
| 1 | a | $1.8\times10^{-5}$ | 93 | 7 | 15 | Comp. Sample |
| 2 | b | " | 98 | 32 | 85 | " |
| 3 | 1 | " | 100 | 7 | 13 | Invention |
| 4 | 9 | " | 100 | 8 | 14 | " |
| 5 | 11 | " | 100 | 7 | 12 | " |

Dye a:

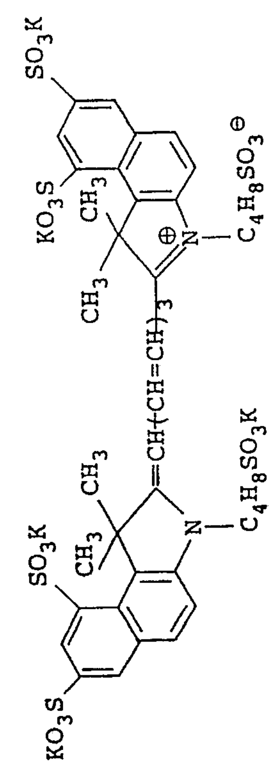

Dye b:

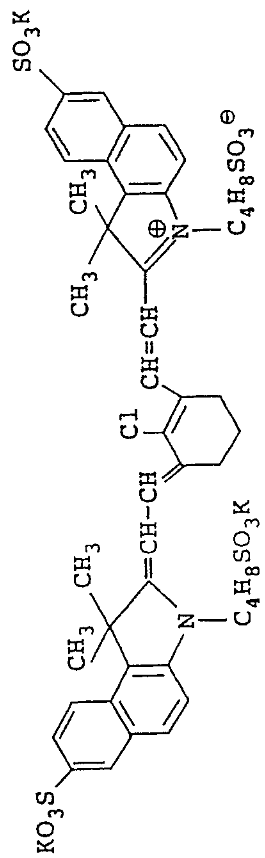

## EXAMPLE 2

Photographic material samples were prepared in the same manner as in Example 1, except that the dyes as indicated in Table 2 below were used in place of the dyes of Table 1.

The samples were evaluated with respect to the storage stability and decolorability in the same manner as in Example 1, and the results obtained are shown in Table 2. Exposure, processing and evaluation were effected in the same manner as in Example 1.

Table 2

| Photographic Material Sample | Dye | Amount of Dye Added (mol/m²) | Percentage of Dye Remained (%) | Percentage of Color Retention Process (A) (%) | Percentage of Color Retention Process (B) (%) | Note |
|---|---|---|---|---|---|---|
| 6 | c | $1.8\times10^{-5}$ | 90 | 5 | 10 | Comp. Sample |
| 7 | d | " | 93 | 7 | 11 | " |
| 8 | 14 | " | 98 | 5 | 11 | Invention |
| 9 | 16 | " | 98 | 5 | 10 | " |
| 10 | 1 | $1.8\times10^{-5}$ | 100 | 5 | 10 | " |
| | 14 | $0.9\times10^{-5}$ | 100 | 5 | 10 | |

Dye c:

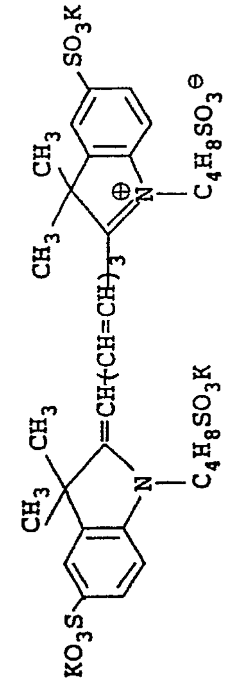

Dye d:

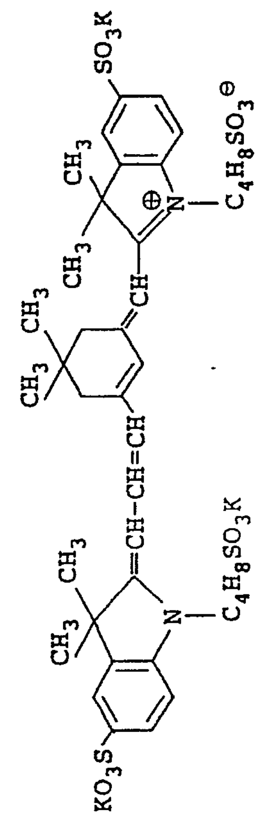

From the results of Tables 1 and 2 above, it is noted that the photographic materials of the present

invention have an excellent storage stability especially in the point that the decomposition and decoloration of the dye added thereto is little. Further advantageously, the color retention in the processed photographic materials of the present invention is small.

While the invention has been described in detail and with reference to specific embodiments thereof, it will be apparent to one skilled in the art that various changes and modifications can be made therein without departing from the spirit and scope thereof.

## Claims

1. A silver halide photographic material comprising a support having provided thereon a hydrophilic colloid layer which contains at least one dye of formula (A):

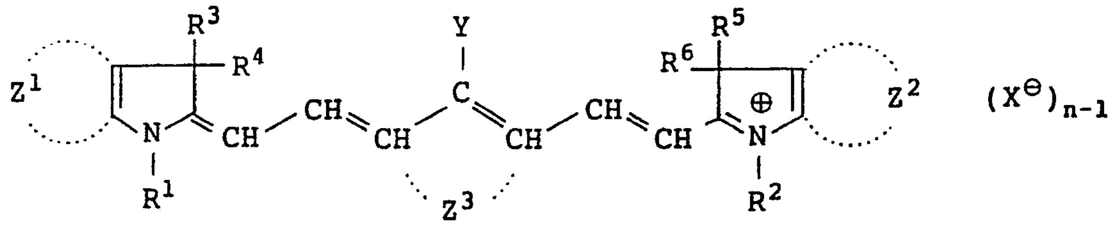

(A)

where $R^1$, $R^2$, $R^3$, $R^4$, $R^5$ and $R^6$ are same or different and each represents a substituted or unsubstituted alkyl group;
$Z^1$ and $Z^2$ each represents a non-metallic atomic group necessary for forming a substituted or unsubstituted benzo-condensed ring or naphtho-condensed ring;
$Z^3$ represents a non-metallic atomic group necessary for forming a 5-membered or 6-membered ring;
Y represents a hydrogen atom or a monovalent group;
X represents an anion; and
n represents 1 or 2, and when the dye molecule forms an intramolecular salt, n is 1.

2. The silver halide photographic material as in claim 1, wherein in formula (A) $Z^1$ and $Z^2$ each represents a non-metallic atomic group necessary for forming a naphto-condensed ring having two or more sulfonic acid groups and the dye molecule has at least six acidic substituents.

3. The silver halide photographic material as in claim 1, wherein in formula (A) $Z^1$ and $Z^2$ each represents a non-metallic atomic group necessary for forming a benzo-condensed ring having one or more sulfonic acid groups and the dye molecule has at least four acidic substituents.

4. The silver halide photographic material as in claim 1, wherein the dye of formula (A) is an anti-irradiation dye.

5. The silver halide photographic material as in claim 1, wherein the dye of formula (A) is an anti-halation dye.

6. The silver halide photographic material as in claim 1, wherein the dye of formula (A) is a filter dye.

7. The silver halide photographic material as in claim 1, which has a hydrophilic colloid layer containing at least one dye of formula (A) and at least one silver halide emulsion layer as spectral-sensitized with at least one of cationic tricarbocyanine dyes and/or cationic dicarbocyanine dyes.

8. The silver halide photographic material as in claim 7, wherein at least two light-sensitive layers are spectral-sensitized with at least one dye to be selected from the group of compounds of formulae (I), (II) and (III):

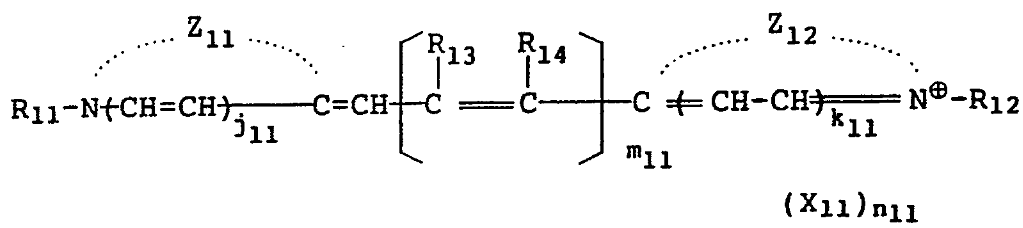

(I)

where $Z_{11}$ and $Z_{12}$ each represents an atomic group necessary for forming a heterocyclic nucleus; $R_{11}$ and $R_{12}$ each represents an alkyl group, an alkenyl group, an alkynyl group or an aralkyl group, which may optionally be substituted;
$m_{11}$ represents a positive integer of 2 or 3;
$R_{13}$ represents a hydrogen atom, and $R_{14}$ represents a hydrogen atom, a lower alkyl group or an aralkyl group, or $R_{14}$ may be bonded to $R_{12}$ to form a 5-membered or 6-membered ring; or when $R_{14}$ is a hydrogen atom, $R_{13}$ may be bonded to other $R_{13}$ to form a hydrocarbon ring or a hetero ring;
$j_{11}$ and $k_{11}$ each represents 0 or 1;
$X_{11}$ represents an acid anion; and
$n_{11}$, represents 0 or 1,

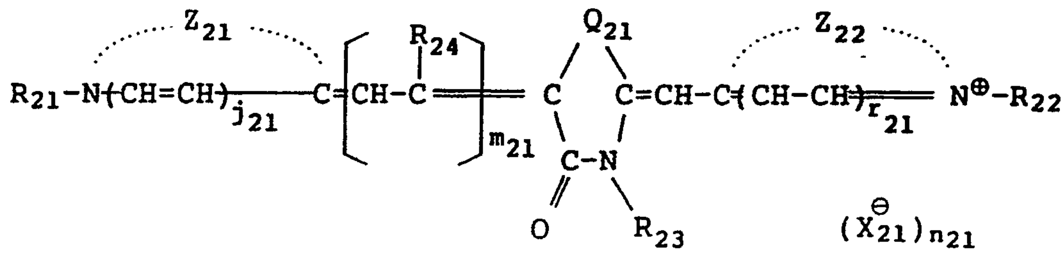

(II)

where $Z_{21}$ and $Z_{22}$ have the same meanings as those of $Z_{11}$ and $Z_{12}$;
$R_{21}$ and $R_{22}$ have the same meanings as those of $R_{11}$ and $R_{12}$;
$R_{23}$ represents an alkyl group, an alkenyl group, an alkynyl group or an aryl group, which may optionally be substituted;
$m_{21}$, represents 2 or 3;
$R_{24}$ represents a hydrogen atom, a lower alkyl group or an aryl group, and when $m_{21}$ is 2, $R_{24}$ and $R_{24}$ may be bonded to each other to form a hydrocarbon ring or a hetero ring;
$Q_{21}$ represents a sulfur atom, an oxygen atom, a selenium atom or $=N\text{-}R_{25}$;
$R_{25}$ has the same meaning as $R_{23}$; and
$j_{21}$, $r_{21}$, $X^{\ominus}_{21}$ and $n_{21}$ have the same meanings as $j_{11}$, $k_{11}$, $X_{11}$ and $n_{11}$, respectively,

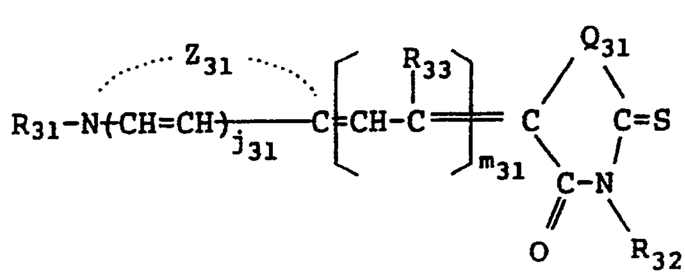

(III)

where $Z_{31}$ represents an atomic group necessary for forming a hetero ring;
$Q_{31}$ has the same meaning as $Q_{21}$;
$R_{31}$ has the same meaning as $R_{11}$ or $R_{12}$;

$R_{32}$ has the same meaning as $R_{23}$;
$m_{31}$ represents 2 or 3;
$R_{33}$ has the same meaning as $R_{24}$, or $R_{33}$ may be bonded to other $R_{33}$ to form a hydrocarbon ring or a hetero ring;
$j_{31}$ has the same meaning as $j_{11}$.

European Patent Office

# EUROPEAN SEARCH REPORT

Application Number

EP 90 12 2859

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 288 076 (KODAK)<br>* page 7, line 30 - page 8, line 23; claims 1-10 *<br>- - - | 1-8 | G 03 C 1/83<br>G 03 C 1/12 |
| Y | WO-A-8 905 478 (KONICA)<br>* page 10 *compound (22) * * claims 1-12 *<br>- - - | 1-8 | |
| Y | EP-A-0 230 100 (MITSUBISHI)<br>* claim 1 *<br>- - - | 8 | |
| Y | PATENT ABSTRACTS OF JAPAN vol. 10, no. 157 (P-464)(2213) 06 June 1986,<br>& JP-A-61 11736 (FUJI) 20 January 1986,<br>* the whole document *<br>- - - - - | 8 | |

TECHNICAL FIELDS SEARCHED (Int. Cl.5)

G 03 C
C 09 B

The present search report has been drawn up for all claims

| Place of search | Date of completion of search | Examiner |
|---|---|---|
| The Hague | 16 January 91 | MAGRIZOS S. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document